(19) Europäisches Patentamt
European Patent Office
Office européen des brevets

(11) **EP 3 064 791 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
**F16C 32/04** *(2006.01)*

(21) Anmeldenummer: **15193457.7**

(22) Anmeldetag: **06.11.2015**

(54) **MAGNETLAGER UND VERFAHREN ZUM KONTAKTLOSEN HALTEN EINES KÖRPERS**

MAGNETIC BEARING AND METHOD FOR CONTACT-FREE HOLDING OF A BODY

PALIER MAGNÉTIQUE ET PROCÉDÉ DE MAINTIEN SANS CONTACT D'UN CORPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2015 DE 102015102913**

(43) Veröffentlichungstag der Anmeldung:
**07.09.2016 Patentblatt 2016/36**

(73) Patentinhaber: **PFEIFFER VACUUM GMBH**
**35614 Asslar (DE)**

(72) Erfinder:
- **Wang, Jinou**
  **35606 Solms-Niederbiel (DE)**
- **Binder, Andreas**
  **64283 Darmstadt (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 0 836 022       CN-A- 1 648 478**
**DE-A1-102006 062 420    JP-A- 2004 132 537**

EP 3 064 791 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf ein Magnetlager und ein Verfahren zum kontaktlosen Halten eines Körpers und insbesondere auf eine Positionsschätzung für sensorlose Magnetlager sowie auf eine Vorrichtung zur Ermittlung einer Positionsabweichung des Körpers in Bezug auf eine Referenzposition des Körpers in dem Magnetlager.

Hintergrund

Ein Elektromagnet übt eine magnetische Anziehungskraft auf einen magnetisierbaren Körper aus, wodurch es möglich wird, eine vollständige Kontrolle über die Position des Körpers zu erlangen und eine Halterung bereitzustellen, die den Körper kontaktlos, beispielsweise in einem schwebenden Zustand, hält. Um einen Körper in eine Richtung zu fixieren, nutzen Magnethalterungen, die man auch als Magnetlager bezeichnen kann, typischerweise zwei Elektromagneten an gegenüberliegenden Seiten in der Bewegungsrichtung des Körpers. Da die magnetische Anziehungskraft mit dem kürzerem Abstand zunimmt, sind Magnethalterungen von sich aus instabil und bedürfen einer besonderen Ansteuerung, um eine sichere Positionierung des Körpers zu ermöglichen.

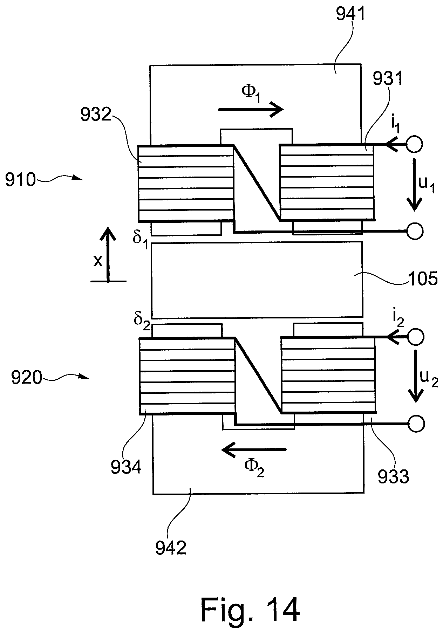

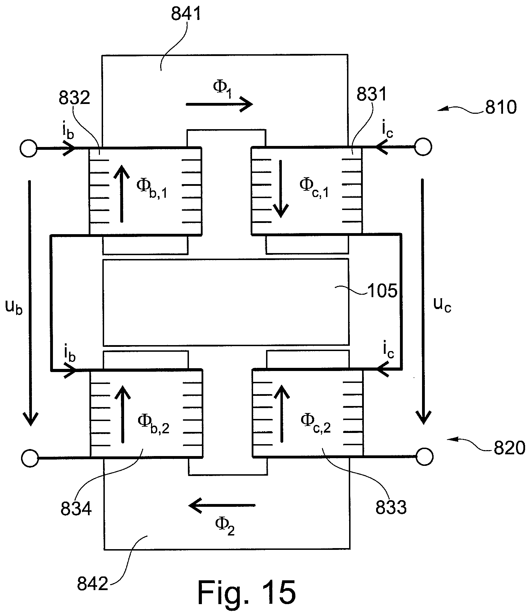

Im Wesentlichen haben sich zwei Ansteuerungen für derartige Halterungen herausgebildet: eine davon nutzt die sogenannte differenzielle Ansteuerung und ist in der Fig. 14 gezeigt, und die andere basiert auf eine differentielle Wicklung und ist in der Fig. 15 gezeigt.

Die Halterung der Fig. 14 hält einen Körper 105 entlang der x-Richtung kontaktlos zwischen zwei gegenüberliegenden Elektromagneten 910, 920, sodass zwischen dem Körper 105 und dem ersten Elektromagneten 910 ein erster Abstand $\delta_1 = X_0 - \hat{x}$ und zwischen dem Körper 105 und dem zweiten Elektromagneten 920 ein zweiter Abstand $\delta_2 = X_0 + \hat{x}$ existiert. $X_0$ definiert die gewünschte Mittenposition und $\hat{x}$ ist die Positionsabweichung, die durch eine gezielte Steuerung minimiert werden soll (d.h. soll möglichst nahe Null sein).

In der gezeigten Halterung weist der erste Elektromagnet 910 eine erste Spule 931 und eine zweite Spule 932 auf, die seriell miteinander verbunden sind, so dass ein erster Strom $i_1$, der in die erste Spule 931 hinein fließt, daran anschließend zur zweiten Spule 932 geleitet wird. Die erste Spule 931 und die zweite Spule 932 teilen sich einen gemeinsamen ersten Spulenkern 941, der eine U-Form aufweist. Der zweite Elektromagnet 920 weist eine dritte Spule 933 und eine vierte Spule 934 auf, die ebenfalls seriell miteinander verbunden sind, so dass ein zweiter Strom $i_2$, der in die dritte Spule 933 hinein fließt, daran anschließend zur vierten Spule 934 geleitet wird. Auch die dritte und vierte Spule 933, 934 nutzen einen gemeinsamen zweiten Spulenkern 942, der ebenfalls eine U-Form hat. An dem ersten Elektromagneten 910 ist eine erste Spannung $u_1$ und an dem zweiten Elektromagneten 920 ist eine zweite Spannung $u_2$ anlegbar. Die erste Spannung $u_1$ verursacht den ersten Strom $i_1$ und die zweite Spannung $u_2$ verursacht den zweiten Strom $i_2$.

Beide Ströme induzieren jeweils ein Magnetfeld, sodass die Elektromagneten 910, 920 entgegengesetzt gerichtete Kräfte auf dem Körper 105 ausüben. Durch eine entsprechende Wahl der Windungszahlen der jeweiligen Spulen der ersten und zweiten Elektromagneten 910, 920, des ersten Stroms $i_1$ durch den ersten Elektromagneten 910 und des zweiten Stroms $i_2$ durch den zweiten Elektromagneten 920 können die magnetischen Anziehungskräfte, die auf den Körper 105 wirken, entsprechend gesteuert werden. So kann beispielsweise durch eine Erhöhung des ersten Stroms $i_1$ der Körper in eine positiven x-Richtung gezogen werden, und durch eine Verringerung des ersten Stroms $i_1$ (im Vergleich zum zweiten Strom $i_2$) in eine negative x-Richtung verschoben werden.

Zur Ansteuerung des ersten Elektromagneten 910 und des zweiten Elektromagneten 920 kann ein sogenanntes pulsbreiten-moduliertes (PWM-) Signal für die erste Spannung $u_1$ und für die zweite Spannung $u_2$ genutzt werden. Wenn während einer Sensorperiode außerdem die Pulsbreiten für die positiven und negativen Spannungswerte gleich groß sind (50% Arbeitszyklus), ist es durch eine derartige Wahl der Ansteuerspannung für die Magnethalterung der Fig. 14 möglich, die Positionsabweichung $\hat{x}_n$ zu einer Zeit tn (d.h. n parametrisiert diskrete Zeitpunkte) durch die folgende Gleichung darzustellen:

$$\hat{x}_n = \frac{\mu_0 A_{\mathrm{p}} N^2}{2 U_{\mathrm{dc}}} \left( \dot{i}_{1,n}^{\,\alpha-\beta} - \dot{i}_{2,n}^{\,\alpha-\beta} \right) \tag{1}$$

wobei für die zeitlichen Ableitungen der Ströme weiter folgendes gilt ($\xi$=1,2)

$$\dot{i}_{\xi,n}^{\,\alpha-\beta} = \dot{i}_{\xi,n,\alpha} - \dot{i}_{\xi,n,\beta} \qquad . \tag{2}$$

In diesen Gleichungen ist $A_p$ die Fläche von jeder Poloberfläche der Elektromagneten, N ist die Anzahl von Windungen, die in jeder Spule gleich gewählt ist, $U_{dc}$ ist der absolute Spannungswert des PWM-Signals, $\alpha$ bezieht sich auf den negativen Schaltzustand, $\beta$ bezieht sich auf den positive Schaltzustand, und $\mu_0$ stellt die Permeabilität des Vakuums.

Somit ist die Positionsabweichung $\hat{x}_n$ aus der Differenz der zeitlichen Ableitungen des ersten Stroms $i_1$ und des zweiten Stroms $i_2$ für die positiven und negativen PWM-Schaltzustände bestimmbar. Insbesondere brauchen für eine solche Magnethalterung lediglich die Anstiege der Stromkurven (beispielsweise über ein Abtastung) bestimmt werden.

Fig. 15 zeigt eine weitere konventionelle Magnethalterung, die eine differenzielle Wicklung nutzt. Diese Magnethalterung umfasst einen erster Elektromagneten 810 mit einer ersten Spule 831 und einer zweiten Spule 832, die einen ersten Magnetfluss $\Phi_1$ erzeugen, und einen zweiten Elektromagneten 820 mit einer dritten Spule 833 und einer vierten Spule 834, die einen zweiten magnetischen Fluss $\Phi_2$ erzeugen. Die erste Spule 831 und die zweite Spule 832 sind entlang eines ersten U-förmigen Spulenkerns 841 angeordnet. Die dritte Spule 833 und die vierte Spule 834 sind entlang eines zweiten U-förmigen Magnetkerns 842 angeordnet.

In dieser Magnethalterung ist die erste Spule 831 mit der dritten Spule 833 seriell geschaltet, sodass über beide Spulen eine Steuerspannung $U_c$ anlegbar ist, die einen Steuerstrom $i_c$ verursacht, der in der ersten Spule 831 und in der dritten Spule 833 fließt. Ebenso ist die zweite Spule 832 und die vierte Spule 834 seriell geschaltet, sodass eine Bias-Spannung $U_b$ (=Spannung, die einen Strom zur Vormagnetisierung bewirkt) über beide Spulen einen Vormagnetisierungsstrom $i_b$ durch die vierte Spule 834 und durch die zweite Spule 832 erzeugt.

Durch entsprechende Wahl der Anzahl von Wicklungen und der Wicklungsrichtung kann eine Änderung der Steuerspannung $U_c$ im Vergleich zur Bias-Spannung $U_b$ genutzt werden, um eine Kraft auf einen Körper 105, der wiederum zwischen dem ersten Elektromagneten 810 und dem zweiten Elektromagneten 820 angeordnet ist, auszuüben. Beispielsweise kann die zweite Spule 832 im Vergleich zur vierten Spule 834 eine entgegengesetzte Wicklungsrichtung aufweisen, während die erste Spule 831 und die dritte Spule 833 gleiche Wicklungsrichtungen aufweisen, oder die zweite und vierte Spule 832, 834 sind gleich gewickelt, aber die erste Spule 831 und die dritte Spule 833 sind entgegengesetzt zueinander gewickelt. Außerdem kann die Bias-Spannung $U_b$ und/oder die Anzahl der Wicklungen derart gewählt sein, dass eine magnetische Kraft in eine Vorzugrichtung wirkt, auch wenn keine Steuerspannung $U_c$ anliegt. Durch eine Steuerung der Steuerspannung $U_c$ kann dann die magnetische Kraft, die durch die Bias-Spannung $U_b$ verursacht wird, kompensiert werden, sodass der Körper mittig gehalten werden kann.

Die Magnethalterung der Fig. 15 ist insbesondere dann vorteilhaft, wenn mehrere solcher Halterungen genutzt werden, um den Körper insgesamt im Gleichgewicht zu halten. In einem solchen Fall kann beispielsweise die Bias-Spannung $U_b$ bzw. der dadurch verursachte Strom $i_b$ für alle Halterungen gleichermaßen genutzt werden. Wenn beispielsweise der Körper 105 eine Drehachse darstellt, die durch die Magnethalterung drehbar gelagert sein soll, können zusätzlich zu den gezeigten ersten und zweiten Elektromagneten 810, 820 weitere Elektromagneten vorhanden sein, die den Körper 105 beispielsweise auch in der Richtung senkrecht zur Zeichenebene und an beiden Enden halten.

Eine derartige serielle Verschaltung hat den Vorteil, dass nur eine Bias-Spannung $U_b$ und somit lediglich ein Spannungsverstärker erforderlich ist. Nur für die Steuerspannungen $U_c$ wären separate Spannungsverstärker erforderlich. Für das Beispiel, dass die Magnethalterung eine Drehachse an zwei Auflagepunkten senkrecht zur Drehrichtung und axial halten soll, wären dafür fünf Vorverstärker für die Steuerspannungen und ein Vorverstärker für die (gemeinsame) Bias-Spannung erforderlich.

Im Vergleich hierzu sind für jede Haltungsrichtung der Halterung, wie sie in der Fig. 14 gezeigt ist, jeweils zwei Vorverstärker erforderlich, da beide Spannungen unabhängig zu steuern sind. Somit wären für fünf Richtungen (2x2 radiale Fixierungen und eine axiale Fixierung) zehn Vorverstärker erforderlich. Daher ist mit der Magnethalterung der Fig. 15 eine Einsparung von vier Vorverstärkern möglich.

Allerdings weist die Magnethalterung der Fig. 15 den Nachteil auf, dass sie aufgrund der seriellen Verschaltung der Spulen auf gegenüberliegenden Seiten des Körpers, keine differentielle Ansteuerung erlaubt (im Gegensatz zu der Magnethalterung der Fig. 14). Somit ist die einfache Glg. (1) für die Magnethalterung der Fig. 15 nicht anwendbar, da dafür eine Ansteuerung erforderlich wäre, bei der in beiden Elektromagneten auf beiden Seiten des Körpers 105 unterschiedliche Ströme fließen (deren Differenz die Positionsabweichung $\hat{x}$ bestimmt).

Obwohl die Magnethalterung der Fig. 15 mit wenigen Vorverstärkern auskommt, kann damit die Position nicht durch die zuvor genannte einfache Strommessung ermittelt werden. Vielmehr sind zusätzliche Positionssensoren erforderlich, wodurch die Halterung letztlich aufwendiger und anfälliger für Fehler wird.

In der EP 0 836 022 A1 ist eine magnetische Lagervorrichtung mit einem Stator und Spulenkernen zum berührungsfreien Lagern einer Welle in einer x-Richtung und einer senkrecht zu dieser verlaufenden y-Richtung beschrieben. Dabei sind zur Lagerung in x-Richtung zwei in x-Richtung auf einander gegenüberliegenden Seiten der Welle angeordnete Spulenkerne und zur Lagerung in y-Richtung zwei in y-Richtung auf einander gegenüberliegenden Seiten der Welle angeordnete Spulenkerne vorgesehen. Die einer jeweiligen Achse x bzw. y zugeordneten Spulenkerne sind mit Wicklungen versehen, die derart in Serie oder parallel geschaltet sind, dass mit jedem dieser Spulenkerne ein im Betrag etwa gleicher magnetischer Fluss erzeugbar ist. Zumindest einer der beiden einer jeweiligen Richtung zugeordneten Spulenkerne ist zudem jeweils mit einer Vormagnetisierungswicklung versehen.

Bei einem aus der JP 2004 132537 A bekannten Rotor-Magnetlager mit zwei auf einander gegenüberliegenden Seiten des Rotors angeordneten Elektromagneten sind die mit einer Steuerspannung beaufschlagten Elektromagneten an eine Vormagnetisierungsspannungsquelle angeschlossen, deren Spannung der Steuerspannung überlagert ist. Die jeweilige Rotorposition wird über eine Impedanzänderung der Elektromagneten erfasst. Dabei werden die durch die beiden Elektromagneten fließenden Ströme über Strommesseinheiten ermittelt und in einer Additionseinheit addiert. Anstelle der beiden Strommesseinheiten und der Additionseinheit kann auch ein Transformator mit zwei Primärwicklungen und einer Sekundärwicklung vorgesehen sein, in dessen Sekundärwicklung eine der Summe der durch die beiden Elektromagneten fließenden Ströme entsprechende Spannung oder Strom induziert wird. Dabei liegt an den beiden Primärwicklungen des Transformators jeweils eine Differenzspannung entsprechend der Differenz der am betreffenden Elektromagneten anliegenden Steuerspannung und der Vormagnetisierungsspannung an.

Eine Aufgabe der vorliegenden Erfindung besteht darin, eine Magnethalterung zu schaffen, die ohne Positionssensoren und mit einem Minimum an Leistungsverstärkern auskommt.

Zusammenfassung

Die oben genannte Aufgabe wird durch ein Magnetlager nach Anspruch 1 und ein Verfahren zum kontaktlosen Halten eines Körpers nach Anspruch 9 gelöst. Die abhängigen Ansprüche beziehen sich auf vorteilhafte Weiterbildungen der Gegenstände der unabhängigen Ansprüche.

Die vorliegende Erfindung bezieht sich auf ein Magnetlager zum kontaktlosen Halten eines Körpers in zumindest einer Richtung mittels eines Magnetfeldes. Das Magnetlager umfasst die folgenden Merkmale: einen ersten Anschluss und einen zweiten Anschluss, zwischen denen ein Spannungssignal anlegbar ist; ein erstes Magnetisierungsmodul; ein zweites Magnetisierungsmodul und ein Vormagnetisierungsmodul. Das erste Magnetisierungsmodul umfasst eine erste Spule mit einem ersten Spulenende, das mit dem ersten Anschluss elektrisch verbunden ist, und einem zweiten Spulenende, das mit dem zweiten Anschluss elektrisch verbunden ist, so dass beim Anliegen des Spannungssignals ein erster elektrischer Strom durch die erste Spule ein erstes Magnetfeld induziert.

Das zweite Magnetisierungsmodul umfasst eine zweite Spule mit einem ersten Spulenende, das mit dem ersten Anschluss elektrisch verbunden ist, und einem zweiten Spulenende, das mit dem zweiten Anschluss elektrisch verbunden ist, so dass beim Anliegen des Spannungssignals ein zweiter elektrischer Strom durch die zweite Spule ein zweites Magnetfeld induziert. Das Vormagnetisierungsmodul erzeugt ein drittes Magnetfeld. Das erste Magnetisierungsmodul, das zweite Magnetisierungsmodul und das Vormagnetisierungsmodul sind derart angeordnet, dass durch eine Steuerung des Spannungssignals der in das Magnetlager eingeführte Körper durch ein Gleichgewicht magnetischer Kräfte in einem kontaktlosen Zustand zwischen dem ersten Magnetisierungsmodul, dem zweiten Magnetisierungsmodul und dem Vormagnetisierungsmodul schwebt. Zur Erfassung einer Positionsabweichung des Körpers bezüglich einer Referenzposition umfasst das Magnetlager Mittel, um die Differenz zwischen der zeitlichen Änderung des ersten Stroms und der zeitlichen Änderung des zweiten Stroms oder die zeitliche Änderung der Differenz zwischen dem ersten Strom und dem zweiten Strom zu erfassen.

Unter einer Spule sollen alle Mittel umfasst sein, die durch einen elektrischen Strom angeregt werden können, um ein Magnetfeld zu erzeugen. Im einfachsten Fall, ist die Spule durch eine Drahtwicklung, die oft mehrere Wicklungen aufweist, gebildet. Spulen können aber auch in einem Festkörper oder auf Platinen durch die Ausbildung entsprechender Leiterbahnen/Strompfade gebildet werden.

Eine elektrische Verbindung muss nicht notwendigerweise eine direkte elektrische Verbindung sein. Im Rahmen der vorliegenden Anmeldung ist unter einer elektrischen Verbindung jeder Strompfad zu verstehen, der einen Fluss von elektrischen Ladungsträgern zwischen den Komponenten erlaubt. Allerdings kann die Verbindung zwischen dem ersten Anschluss und der ersten Spule und dem ersten Anschluss und der zweiten Spule beispielsweise eine direkte Verbindung sein, ohne dass weitere Elemente dazwischen geschaltet sind. Insbesondere ist gemäß weiterer Ausführungsbeispiele keine Treiberschaltung zwischen dem ersten und zweiten Anschluss und dem ersten Magnetisierungsmodul und dem zweiten Magnetisierungsmodul geschaltet.

Der Begriff "Schweben" soll im Rahmen der vorliegenden Erfindung weit ausgelegt werden. Insbesondere ist darunter zu verstehen, dass kein direkter körperlicher Kontakt zwischen dem Körper einerseits und dem ersten Magnetisierungsmodul und dem zweiten Magnetisierungsmodul andererseits vorhanden ist. Der Körper kann jedoch mit anderen Elementen verbunden sein, die jedoch nicht direkt der Halterung des Körpers bezüglich seiner Bewegungsrichtung dienen.

Ein Magnetlager soll alle Mittel umfassen, die zur magnetischen Halterung eines Körpers geeignet sind, und soll insbesondere Drehlager als auch Linearlager umfassen. Der Körper kann beispielsweise vorgesehen sein, um eine rotierende Bewegung oder auch eine planare (lineare) schwebende Bewegung auszuführen. Ebenso ist es möglich, dass das erste Magnetisierungsmodul, das zweite Magnetisierungsmodul und das Vormagnetisierungsmodul eine Dreiecksanordnung bilden, so dass das Vormagnetisierungsmodul eine Bias-Kraft auf den Körpers hin zu dem Vormagnetisierungsmodul ausübt, während das erste und zweite Vormagnetisierungsmodul weitere Kräfte auf den Körper entlang deren Dreiecksrichtung ausüben, um so das genannte Gleichgewicht zu erreichen.

Bei weiteren Ausführungsbeispielen umfasst das Magnetlager einen ersten Stromsensor, der ausgebildet ist, einen Sensorstrom basierend auf einer Differenz des ersten Stroms und des zweiten Stroms zu erfassen. Optional kann ein zweiter Stromsensor umfasst sein, der ausgebildet ist, einen Steuerstrom basierend auf einer Summe des ersten Stroms und des zweiten Stroms zu erfassen.

Der erste Stromsensor kann beispielsweise entlang der Zuführungsleitungen von dem ersten Anschluss und dem zweiten Anschluss hin zu der ersten Spule und der zweiten Spule derart angeordnet sein, dass durch den ersten Stromsensor der erste Strom und der zweite Strom in entgegengesetzten Richtungen fließen und der erste Stromsensor so direkt die Differenz der beiden Ströme detektieren kann. Ebenso kann der zweite Stromsensor derart angeordnet sein, dass die beiden Leitungen, die den ersten und zweiten Strom durchleiten, den zweiten Stromsensor in einer gleichen Richtung passieren. Optional kann der zweite Stromsensor den Gesamtstrom messen, der in den ersten Anschluss hineinfließt oder aus dem zweiten Anschluss abfließt.

Bei weiteren Ausführungsbeispielen umfasst das Magnetlager weiter einen Transformator und einen ersten und zweiten Sensoranschluss. Der Transformator weist eine erste Primärspule, eine zweite Primärspule und eine Sekundärspule auf, die über einen gemeinsamen Spulenkern magnetisch miteinander gekoppelt sind. Die erste Spule ist entlang eines Strompfades des ersten Stroms angeordnet, und die zweite Spule ist entlang eines Strompfades des zweiten Stroms angeordnet. Die Sekundärspule ist zwischen dem ersten Sensoranschluss und dem zweiten Sensoranschluss elektrisch geschaltet. Beispielsweise fließt durch die erste Spule nur der erste Strom bzw. nicht der zweite Strom, während durch die zweite Primärspule nur der zweite Strom fließt bzw. nicht der erste Strom. Unter einem Transformator sollen alle Mittel verstanden werden, die in der Lage sind, ein elektrisches Signal basierend auf einer zeitlichen Änderung eines Stroms zu erzeugen. Somit ist ein Transformator insbesondere ein Sensor zur Detektierung von Variationen einer Stromstärke.

Mit dieser Anordnung wird erreicht, dass eine zeitliche Änderung der Stromdifferenz zwischen dem ersten und zweiten Strom direkt erfasst werden kann, ohne dass dazu eine Stromabtastung erforderlich wäre. Dies ist insbesondere dann vorteilhaft, wenn das Magnetlager so ausgebildet ist, dass die Positionsabweichung lediglich durch die zeitliche Änderung der Differenz zwischen dem ersten und dem zweiten Strom bestimmbar ist. Dieses Transformatorkonzept definiert dann eine direkte Möglichkeit der Bestimmung der Positionsabweichung. Da ansonsten Stromabtastungen mit einer hohen Frequenz durchzuführen wären, liefert das Transformatorkonzept auch den Vorteil, dass an die Hardware geringere Anforderungen gestellt werden können (z.B. hinsichtlich der Verarbeitungsgeschwindigkeit).

Bei weiteren Ausführungsbeispielen ist das Vormagnetisierungsmodul ausgebildet, um eine erste und eine zweite magnetische Flusskomponente zu erzeugen, wobei die erste magnetische Flusskomponente eine gleiche Richtung aufweist, wie ein durch die erste Spule erzeugter Magnetfluss, und die zweite magnetische Flusskomponente eine entgegengesetzte Richtung aufweist, wie ein durch die zweite Spule erzeugter Magnetfluss, und zwar wenn der erste Strom durch die erste Spule und der zweite Strom durch die zweite Spule fließt.

Bei weiteren Ausführungsbeispielen umfasst das Vormagnetisierungsmodul zumindest einen Permanentmagneten, optional einen ersten Permanentmagneten und einen zweiten Permanentmagneten, wobei der erste Permanentmagnet magnetisch an die erste Spule des ersten Magnetisierungsmoduls gekoppelt ist und der zweite Permanentmagnet magnetisch an die zweite Spule des zweiten Magnetisierungsmoduls gekoppelt ist.

Der Begriff "koppeln" ist so auszulegen, dass er jegliche Verbindung umfasst, über die eine Energie transportiert werden kann. Im vorliegenden Fall sind das erste Magnetisierungsmodul und der zweite Permanentmagnet bzw. das zweite Magnetisierungsmodul und der zweite Permanentmagnet durch einen Pfad für einen magnetischen Fluss miteinander verbunden (beispielsweise einen Spulenkern oder ein anderes magnetisches Material, welches einen magnetischen Fluss leitet).

Bei weiteren Ausführungsbeispielen umfasst das Vormagnetisierungsmodul zumindest eine Spule, die durch einen Vormagnetisierungsstrom anregbar ist, um ein steuerbares drittes Magnetfeld durch den Vormagnetisierungsstrom zu erzeugen. Optional kann die zumindest eine Spule eine dritte Spule und eine vierte Spule umfassen, die elektrisch in Reihe geschaltet und durch eine Bias-Spannung anregbar sind. Das Magnetlager kann optional weiter einen ersten Spulenkern und einen zweiten Spulenkern umfassen, wobei die erste Spule und die dritte Spule um den ersten Spulenkern gewickelt sind, und die zweite Spule und die vierte Spule um den zweiten Spulenkern gewickelt sind.

Beispielsweise kann die dritte Spule des Vormagnetisierungsmoduls ausgebildet sein, um einen magnetischen Fluss auf dem ersten Spulenkern der ersten Spule zu erzeugen. Optional kann die vierte Spule des Vormagnetisierungsmoduls ausgebildet sein, um einen zweiten magnetischen Fluss auf dem zweiten Spulenkern der zweiten Spule zu erzeugen.

Bei weiteren Ausführungsbeispielen umfasst das Magnetlager weiter ein Steuermodul, das ausgebildet ist, um das Spannungssignal zu steuern, und/oder um über die Bias-Spannung das dritte magnetische Feld des Vormagnetisierungsmoduls zu steuern.

Das Steuermodul kann optional weiter ausgebildet sein, um ein erstes pulsbreiten-moduliertes (PWM-) Signal als Spannungssignal mit einem positiven Puls und einem negativen Puls bereitzustellen und um eine Pulsbreite des positiven Pulses und/oder des negativen Pulses zu ändern, um so das erste Magnetfeld und das zweite Magnetfeld zu ändern. Optional kann das Steuermodul ein zweites pulsbreiten-moduliertes (PWM-) Signal als Bias-Spannungssignal mit einem positiven Puls und einem negative Puls bereitstellen und eine Pulsbreite des positiven Pulses und/oder des negativen Pulses ändern, um so das dritte Magnetfeld zu ändern.

Bei weiteren Ausführungsbeispielen kann das Steuermodul weiter ausgebildet sein, um während einer Sensorperiode den Sensorstrom zu erfassen und zumindest für einen Abschnitt der Sensorperiode ein Spannungsniveau des zweiten PWM-Signals konstant oder gleich einem Spannungsniveau des ersten PWM-Signals zu halten. Dadurch kann erreicht werden, dass während der Sensorperiode das dritte Magnetfeld konstant bleibt. Insbesondere kann dies durch ein Nullsetzen des zweiten PWM-Signals erreicht werden, beispielsweise durch ein Kurzschließen des dritten mit dem vierten Anschluss.

Bei weiteren Ausführungsbeispielen ist das Steuermodul weiter ausgebildet ist, um das erste PWM-Signal während der Sensorperiode mit gleichen Pulsbreiten für die positiven und negativen Pulse bereitzustellen und während einer Steuerperiode die Pulsbreiten für die positiven und negativen Pulse verschieden zu wählen, um so das erste und zweite Magnetfeld zu ändern. Insbesondere können sich eine Vielzahl von Sensorperioden und Steuerperioden einander abwechseln, wobei eine Erfassung des Sensorstroms nur in zumindest einigen Sensorperioden erfolgt.

Die PWM-Signale können mehrere Niveaus aufweisen, die sowohl positiv, negativ oder auch Null sein können. Beispielsweise können die pulsbreiten-modulierten Signale 2-Niveau-PWM-Signale (z.B. $\pm U_{dc}$) und/oder 3-Niveau-PWM-Signale (+$U_{dc}$, 0, -$U_{dc}$) umfassen.

Bei weiteren Ausführungsbeispielen ist das Steuermodul weiter ausgebildet, um während der Sensorperiode den Sensorstrom mehrfach zu erfassen und, basierend darauf, eine zeitliche Änderung des Sensorstroms zu ermitteln.

Bei weiteren Ausführungsbeispielen ist das Steuermodul weiter ausgebildet, um basierend auf der ermittelten zeitlichen Änderung des Sensorstroms eine Abweichung einer Position des Körpers entlang der zumindest einen Richtung festzustellen und, basierend darauf, eine Änderung des Steuerstrom in der Steuerperiode zu bewirken, um so eine Positionskorrektur des Körper zu veranlassen.

Bei weiteren Ausführungsbeispielen weist das erste Magnetisierungsmodul im Gleichgewicht eine gleiche Induktivität wie das zweite Magnetisierungsmodul auf. Damit wird erreicht, dass bei gleicher Spannung, die an dem ersten Magnetisierungsmodul und an dem zweiten Magnetisierungsmodul anliegt, im Wesentlichen ein gleicher Strom durch beide Module fließt. Somit wird im Gleichgewicht der erste Strom gleich dem zweiten Strom. Wenn jedoch kein Gleichgewicht vorliegt, d.h. der Körper befindet sich nicht in der gewünschten Mittenposition, werden Stromänderungen erzeugt, die verschieden voneinander sind und eine nichtverschwindende Messgröße liefern. Da jedoch die Sensorgröße die Differenz aus beiden Strömen (bzw. deren zeitlichen Änderungen) ist, wird hierdurch das Signal-Rauch-Verhältnis (SNR) verbessert. Es versteht sich, dass die mathematische Gleichheit in der Praxis nicht vorliegt und evtl. auch nicht gewünscht ist. Daher ist in der vorliegenden Erfindung eine Gleichheit stets so zu verstehen, dass Toleranzbreiten von $\pm 5\%$ oder $\pm 20\%$ erlaubt sind.

Die vorliegende Erfindung bezieht sich auf eine magnetische Halterung mit mehreren Magnetlagern, wie sie zuvor beschrieben wurden. Die mehreren Magnetlager sind entlang einer Ebene oder um eine Achse herum angeordnet, so dass der Körper kontaktlos innerhalb der Ebene verschiebbar ist oder um eine Drehachse kontaktlos drehbar ist.

Die vorliegende Erfindung bezieht sich auch auf ein Verfahren zum kontaktlosen Halten eines Körpers zwischen einem ersten Magnetisierungsmodul mit einer ersten Spule, einem zweiten Magnetisierungsmodul mit einer zweiten Spule und einem Vormagnetisierungsmodul, das eine Vormagnetisierung bereitstellt, wobei die erste Spule und die zweite Spule parallel mit einem ersten und zweiten Anschluss verbunden sind. Das Verfahren umfasst die folgenden Schritte: Anregen der ersten Spule und der zweiten Spule mit einem Spannungssignal an dem ersten und zweiten Anschluss, um durch einen ersten Strom in der ersten Spule ein erstes Magnetfeld zu erzeugen und durch einen zweiten Strom in der zweiten Spule ein zweites Magnetfeld zu erzeugen; Erfassen einer Differenz von zeitlichen Änderungen des ersten Stroms und des zweiten Stroms und Ermitteln einer Positionsabweichung des Körpers basierend auf der Differenz; und Ändern des Spannungssignal basierend auf der ermittelten Positionsabweichung, sodass der Körper durch ein Gleichgewicht des ersten Magnetfeldes, des zweiten Magnetfeldes und der Vormagnetisierung in einem kontaktlosen Zustand zwischen dem ersten Magnetisierungsmodul, dem zweiten Magnetisierungsmodul und dem Vormagnetisierungsmodul schwebend gehalten wird.

Die zeitliche Änderung des Stromes kann direkt oder indirekt gemessen oder ermittelt werden. Beispielsweise erzeugt ein zeitlich sich ändernder Strom ein Magnetfeld, welches seinerseits einen Strom induzieren und somit gemessen werden kann. Eine weitere Möglichkeit besteht darin, den Strom während einer Zeitperiode zu erfassen und deren zeitliche Ableitung zu berechnen. Daher können bei dem Verfahren die zeitlichen Änderungen des ersten Stroms und des zweiten Stroms mit einer Mehrfachabtastung einer Kombination des ersten Stroms und des zweiten Stroms oder mit einem Transformator, der durch eine Kombination des ersten Stroms und des zweiten Stroms auf seiner Primärseite angeregt wird, erfasst werden.

Das Verfahren kann weiter ein Erfassen eines Summenstromes aus dem erste Strom und dem zweiten Strom umfassen und kann die Änderung des Spannungssignal basierend ferner basierend auf dem erfassten Summenstrom durchführen. Ausführungsbeispiele umfassen auch ein Speichermedium mit einem darauf gespeicherten Computerprogramm, welches ausgebildet ist, um eine Vorrichtung zu veranlassen, das zuvor beschriebene Verfahren auszuführen, wenn es auf einem Prozessor (Verarbeitungseinheit) läuft. Das Speichermedium kann ein maschinenlesbares Medium sein, das Mechanismus zum Speichern oder Übertragen von Daten in einer von einer Maschine (z.B. einem Computer) lesbaren Form beinhalten. Die Vorrichtung kann beispielsweise ein Steuermodul mit einem Prozessor sein, auf welchem das Computerprogramm läuft. Die Erfindung betrifft auch eine Vorrichtung zur Ermittlung einer Positionsabweichung eines, insbesondere rotierenden, Körpers in Bezug auf eine Referenzposition, insbesondere Mittenposition, des Körpers in einem erfindungsgemäßen Magnetlager zwischen einem ersten Magnetisierungsmodul mit wenigstens einer ersten Spule, die mit einem ersten Spannungssignal beaufschlagbar ist, so dass ein erster elektrischer Strom durch die erste Spule bewirkt und ein erstes Magnetfeld induziert wird, und einem zweiten Magnetisierungsmodul mit wenigstens einer zweiten Spule, die parallel zur ersten Spule mit dem ersten Spannungssignal beaufschlagbar ist, so dass ein zweiter elektrischer Strom durch die zweite Spule bewirkt und ein zweites Magnetfeld induziert wird, wobei die Vorrichtung dazu ausgebildet ist, eine Positionsabweichung des Körpers bzgl. der Referenzposition in Abhängigkeit von einer zeitlichen Änderung des ersten Stroms und einer zeitlichen Änderung des zweiten Stroms zu detektieren.

Durch die erfindungsgemäße Vorrichtung kann die Position des Körpers zwischen den beiden Magnetisierungsmodulen auf einfache Weise und ohne Verwendung von Positionssensoren bestimmt werden. Bei dem ersten Spannungssignal kann es sich um ein PWM-Signal handeln. Es kann sich aber auch um ein anderes zeitveränderliches, insbesondere periodisches, Signal, wie etwa um ein sinusförmiges Signal, handeln.

Bei dem ersten und zweiten Magnetisierungsmodul handelt es sich um Magnetisierungsmodule des erfindungsgemäßen Magnetlagers, in welches der Körper - wie beschrieben - eingeführt ist. Das Magnetlager kann auch ein magnetisches Vormagnetisierungsmodul aufweisen, welches - wie beschrieben - zur Erzeugung eines weiteren Magnetfelds vorgesehen ist.

In dem Teilstromkreis, durch welchen der erste Strom strömt, können neben der ersten Spule noch weitere Verbraucher, wie etwa eine erste Primärspule eines Transformators, angeordnet sein. Entsprechendes gilt für den Teilstromkreis, durch welchen der zweite Strom strömt, da in diesem neben der zweiten Spule z.B. noch eine zweite Primärspule des Transformators angeordnet sein kann. Die Formulierung, dass die erste Spule bzw. die zweite Spule mit dem ersten Spannungssignal beaufschlagt wird, ist somit breit auszulegen, also zum Beispiel derart, dass der Teilstromkreis der ersten Spule bzw. ein dazu parallel geschalteter Teilstromkreis der zweiten Spule mit dem ersten Spannungssignal, bspw. von einer Spannungsquelle, versorgt werden.

Vorzugsweise ist die Vorrichtung dazu ausgebildet, die Differenz zwischen der zeitlichen Änderung des ersten Stroms und der zeitlichen Änderung des zweiten Stroms oder die zeitliche Änderung der Differenz zwischen dem ersten Strom und dem zweiten Strom zu erfassen. Anhand einer derart erfassten Änderung kann die Positionsabweichung des Körpers z.B. anhand der vorstehend beschriebenen Gleichung (1) ermittelt werden.

Bevorzugt umfasst die Vorrichtung einen Verstärker zur Verstärkung der Differenz zwischen dem ersten Strom und dem zweiten Strom oder der zeitlichen Änderung der Differenz zwischen dem ersten Strom und dem zweiten Strom. Durch eine Verstärkung der Differenz zwischen dem ersten Strom und dem zweiten Strom oder der zeitlichen Änderung der Differenz zwischen dem ersten Strom und dem zweiten Strom kann das Signal-zu-Rausch-Verhältnis verbessert werden, insbesondere im Vergleich zu einer Verstärkung des ersten und zweiten Stroms und anschließender Differenzbildung.

Nach einer bevorzugten Ausgestaltung der Erfindung umfasst die Vorrichtung einen Transformator mit einer ersten Primärspule, einer zweiten Primärspule und einer Sekundärspule, wobei der erste Strom durch die erste Primärspule und der zweite Strom durch die zweite Primärspule derart strömt, dass in der Sekundärspule ein Spannungssignal induziert wird, das von der Differenz der zeitlichen Änderung des ersten und zweiten Stroms abhängig ist. Der Transformator ist somit sensitiv auf die Differenz der zeitlichen Variation des ersten und zweiten Stromes, wodurch eine Ermittlung der Positionsabweichung des Körpers erfolgen kann, insbesondere ohne dass eine Signalabtastung oder dergleichen durchgeführt werden muss.

Die Vorrichtung kann dazu ausgebildet sein, die Positionsabweichung, insbesondere deren Betrag, in Abhängigkeit von der Amplitude des in der Sekundärspule induzierten Spannungssignals zu bestimmen. Die Amplitude kann proportional zur Positionsabweichung des Körpers sein, so dass der Betrag der Positionsabweichung aus dem Produkt eines vorgegebenen oder vorgebbaren Faktors und der Amplitude bestimmt werden kann.

Die Vorrichtung kann dazu ausgebildet sein, die Phasenlage des induzierten Spannungssignals in Bezug auf das erste Spannungssignal zu bestimmen und die Richtung der Positionsabweichung anhand der Phasenlage zu ermitteln. Die Phasenlage des induzierten Spannungssignals in Bezug auf das erste Spannungssignal, mit dem die ersten Spule und die zweite Spule parallel zueinander beaufschlagt werden, gibt an, ob der Körper ausgehend von seiner Referenzlage in Richtung der ersten Spule oder zweiten Spule ausgelenkt ist. Daher kann anhand der Phasenlage bestimmt werden, in welcher Richtung die Positionsabweichung des Körpers in Bezug auf die Referenzlage vorliegt, also ob der Körper aus der Referenzlage hin zur ersten Spule oder hin zur zweiten Spule ausgelenkt ist.

Nach einer bevorzugten Ausgestaltung der Erfindung ist ein Verstärker, insbesondere mit einer hohen effektiven Eingangsimpedanz, zur Verstärkung des induzierten Spannungssignals vorgesehen. Dadurch kann auch ein verhältnismäßig schwaches Spannungssignal noch zur Bestimmung der Positionsabweichung herangezogen werden.

Bevorzugt ist der Teilstromkreis der Sekundärspule derart ausgelegt, dass in diesem nur ein geringer Strom fließt. Der Teilstromkreis kann somit in Art eines "open circuit" ausgelegt sein. Ein geringer Stromfluss im Teilstromkreis der Sekundärspule kann zum Beispiel dadurch erreicht werden, dass ein Operationsverstärker mit hoher Eingangsimpedanz in dem Teilstromkreis angeordnet wird.

Bei der ersten Spule und der zweiten Spule kann es sich um jeweilige Luftspulen ohne Eisenkern handeln. Dadurch können Kosten eingespart werden.

Alternativ kann ein Eisenkern für die erste Spule und/oder die zweite Spule vorgesehen sein.

Der Körper kann in einem kontaktlosen Zustand zwischen dem ersten Magnetisierungsmodul und dem zweiten Magnetisierungsmodul, insbesondere eines erfindungsgemäßen Magnetlagers, bei einem Gleichgewicht der magnetischen Kräfte in der Referenzposition, insbesondere Mittenposition, schweben. Eine Auslenkung des Körpers aus der Referenzposition heraus kann mittels der erfindungsgemäßen Vorrichtung auf einfache Weise detektiert werden.

Die vorliegende Erfindung bezieht sich auch auf eine Messvorrichtung mit mehreren Vorrichtungen zur Ermittlung einer Positionsabweichung, wie sie zuvor beschrieben wurden. Die mehreren Vorrichtungen sind entlang einer Ebene oder um eine Achse herum angeordnet, so dass der Körper kontaktlos innerhalb der Ebene verschiebbar ist oder um eine Drehachse kontaktlos drehbar ist.

Bei dem Körper handelt es sich vorzugsweise um einen Rotor bzw. um eine Rotorwelle einer Vakuumpumpe, insbesondere Turbomolekularpumpe, an dem bzw. an der zur magnetischen Lagerung Permanentmagnete angeordnet sein können. Die Permanentmagnete können im Rotor bzw. in der Rotorwelle vergraben sein. Derartige Rotoren für Vakuumpumpen, insbesondere Turbomolekularpumpen, sind an sich bekannt.

Die Erfindung betrifft auch ein Magnetlager mit einer erfindungsgemäßen Vorrichtung zur Ermittlung der Positionsabweichung, wobei es sich bei dem Magnetlager vorzugsweise um ein Magnetlager einer Vakuumpumpe, insbesondere Turbomolekularpumpe, handelt.

Ferner betrifft die Erfindung eine Vakuumpumpe, insbesondere Turbomolekularpumpe, mit einem erfindungsgemäßen Magnetlager und/oder mit einer erfindungsgemäßen Vorrichtung zur Ermittlung der Positionsabweichung, wobei es sich bei dem Körper vorzugsweise um einen Rotor oder um eine Rotorwelle der Vakuumpumpe handelt.

Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispielen, die jedoch nicht so verstanden werden sollten, dass sie die Offenbarung auf die spezifischen Ausführungsformen einschränkt, sondern lediglich der Erklärung und dem Verständnis dienen.

Fig. 1        zeigt ein Ausführungsbeispiel für ein Magnetlager gemäß der vorliegenden Erfindung.
Fig. 2        zeigt weitere Details eines erfindungsgemäßen Magnetlagers.
Fig. 3        zeigt ein Beispiel für ein PWM-Spannungssignal.
Fig. 4        zeigt Abtastungen eines Stromsignals während der Sensorperioden.
Fig. 5        zeigt ein Beispiel für eine spezielle Bias-Spannung während der Sensorperiode und Steuerperioden.
Fig. 6A,B     zeigen weitere Ausführungsbeispiele für ein Magnetlager.
Fig. 7a,b     zeigen beispielhafte Anordnungen der Stromsensoren.
Fig. 8        veranschaulicht Schwankungsbreiten bei der Stromerfassung.
Fig. 9a,b     zeigen eine Nutzung eines Transformators für die Erfassung von Stromänderungen.
Fig. 10A,B    zeigen Auswerteschaltungen für die Sensorsignalerfassung.
Fig. 11       zeigt eine Auswerteschaltung für eine Sensorschaltung mit Transformator.
Fig. 12       veranschaulicht einen Signalverlauf für die Auswerteschaltung der Fig. 11.
Fig. 13       zeigt ein Flussdiagramm für ein erfindungsgemäßes Verfahren.
Fig. 14       zeigt ein konventionelles Magnetlager.
Fig. 15       zeigt ein weiteres konventionelles Magnetlager.
Fig. 16       zeigt eine weitere Nutzung eines Transformators für die Erfassung von Stromänderungen.

Detaillierte Beschreibung

Die vorliegende Erfindung betrifft insbesondere ein Magnetlager, das die Vorteile der Halterungen aus den Figuren 14 und 15 vereint.

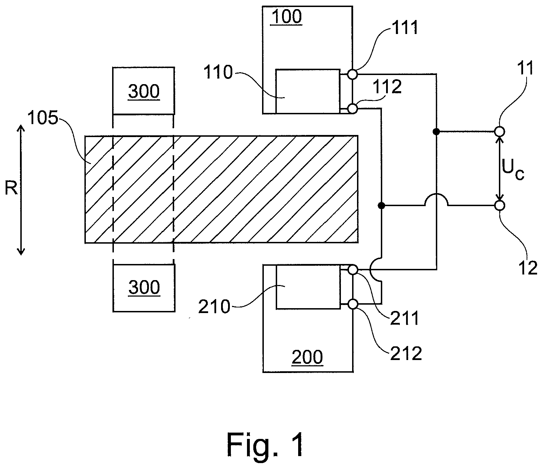

Fig. 1 zeigt ein Magnetlager zum kontaktlosen Halten eines Körpers 105 in zumindest einer Richtung R mittels eines Magnetfeldes. Das Magnetlager umfasst: einen ersten Anschluss 11 und einen zweiten Anschluss 12, zwischen denen ein Spannungssignal $U_c$ anlegbar ist; ein erstes Magnetisierungsmodul 100; ein zweites Magnetisierungsmodul 200; und ein Vormagnetisierungsmodul 300, welches ein drittes Magnetfeld erzeugt. Das erste Magnetisierungsmodul 100 umfasst eine erste Spule 110 mit einem ersten Spulenende 111, das mit dem ersten Anschluss 11 elektrisch verbunden ist, und einem zweiten Spulenende 112, das mit dem zweiten Anschluss 12 elektrisch verbunden ist, so dass beim Anliegen des Spannungssignals $U_c$ ein erster elektrischer Strom $i_1$ durch die erste Spule 110 ein erstes Magnetfeld induziert. Das zweite Magnetisierungsmodul 200 umfasst eine zweite Spule 210 mit einem ersten Spulenende 211, das mit dem ersten Anschluss 11 elektrisch verbunden ist, und einem zweiten Spulenende 212, das mit dem zweiten Anschluss 12 elektrisch verbunden ist, so dass beim Anliegen des Spannungssignals $U_c$ ein zweiter elektrischer Strom $i_2$ durch die zweite Spule 210 ein zweites Magnetfeld induziert. Das erste Magnetisierungsmodul 100, das zweite Magnetisierungsmodul 200 und das Vormagnetisierungsmodul 300 sind derart angeordnet, dass durch eine Steuerung des Spannungssignals $U_c$ der in das Magnetlager eingeführte Körper 105 durch ein Gleichgewicht magnetischer Kräfte in einem kontaktlosen Zustand zwischen dem ersten Magnetisierungsmodul 100, dem zweiten Magnetisierungsmodul 200 und dem Vormagnetisierungsmodul 300 schwebt. Beim Gleichgewicht der magnetischen Kräfte nimmt der Körper 105 eine Referenzposition, wie etwa eine Mittenposition, zwischen dem ersten und zweiten Magnetisierungsmodul 100, 200 ein. Mit einer erfindungsgemäßen Vorrichtung zur Ermittlung einer Positionsabweichung kann die Abweichung der Position des Körpers 105 von der Referenzposition bestimmt werden. Die Auslenkung des Körpers 105 gegenüber der Referenzposition in Richtung des ersten oder zweiten Magnetisierungsmoduls 100, 200 kann somit bestimmt werden.

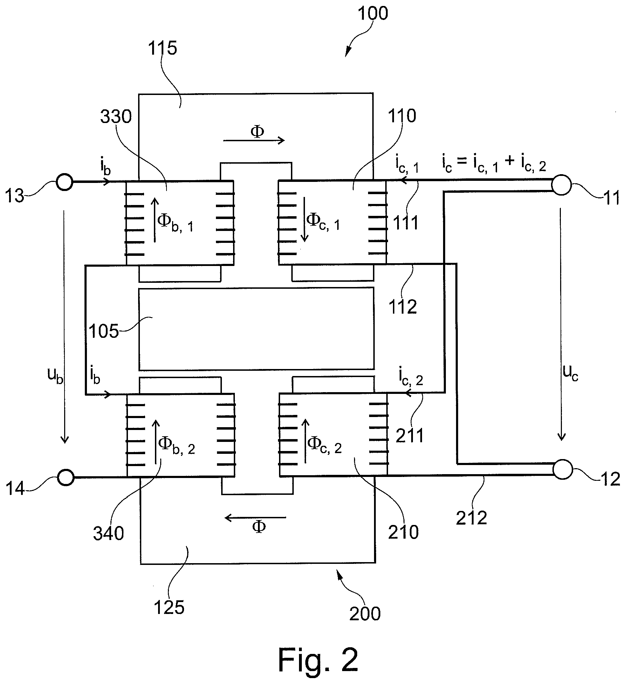

Fig. 2 zeigt weitere Details eines Ausführungsbeispiels für ein Magnetlager gemäß der vorliegenden Erfindung. In diesem Ausführungsbeispiel umfasst das Vormagnetisierungsmodul 300 eine dritte Spule 330 und eine vierte Spule 340, die seriell miteinander verbunden sind, wobei die dritte Spule 330 mit einem dritten Anschluss 13 und die vierte Spule 340 mit einem vierten Anschluss 14 elektrisch verbunden sind. Demzufolge verursacht ein Bias-Spannungssignal (Bias-Spannung) $U_b$, die an dem dritten und vierten Anschluss 13, 14 anliegt, einen Vormagnetisierungsstrom $i_b$, der durch die dritte Spule 330 und die vierte Spule 340 fließt.

Die dritte Spule 330 des Vormagnetisierungsmoduls 300 ist auf der gleichen Seite vom Körper 105 angeordnet wie die erste Spule 110 des ersten Magnetisierungsmoduls 100, während die vierte Spule 340 des Vormagnetisierungsmoduls 300 auf der gleichen Seite des Körpers 105 angeordnet wie die zweite Spule 210 des zweiten Magnetisierungsmoduls 200. Die dritte Spule 330 des Vormagnetisierungsmoduls 300 und die erste Spule 110 des ersten Magnetisierungsmoduls 100 sind um einen ersten Spulenkern 115 gewickelt, so dass sie einen ersten magnetischen Fluss $\Phi_1$ erzeugen. Die vierte Spule 340 des Vormagnetisierungsmoduls 300 und die zweite Spule 210 des zweiten Magnetisierungsmoduls 200 sind um einen zweiten Spulenkerns 125 gewickelt, so dass sie einen zweiten magnetischen Fluss $\Phi_2$ erzeugen.

Der erste Spulenkern 115 und der zweite Spulenkern 125 weisen jeweils eine U-Form auf, wobei entlang des einen Schenkels die erste Spule 110 des ersten Magnetisierungsmoduls 100 und entlang des anderen Schenkels die dritte Spule 330 des Vormagnetisierungsmoduls 300 angeordnet ist. Ebenso sind die zweite Spule 210 des zweiten Magnetisierungsmoduls 200 an dem einen Schenkel des U-förmig gestalteten zweiten Spulenkerns 125 und die vierte Spule 340 des Vormagnetisierungsmoduls 300 an dem anderen Schenkel angeordnet.

Der erste Anschluss 11 ist, wie in der Fig. 1 gezeigt, sowohl mit dem ersten Spulenende 111 der ersten Spule 110 als auch mit dem ersten Spulenende 211 der zweiten Spule 210 elektrisch verbunden. Ebenso ist der zweite Anschluss 12 elektrisch mit dem zweiten Spulenende 112 der ersten Spule 110 und mit dem zweiten Spulenende 212 der zweiten Spule 210 verbunden. Somit wird der Steuerstrom $i_c$, der über den ersten Anschluss 11 in die Magnethalterung eingespeist wird, aufgespalten in den ersten Strom $i_1$, der zunächst durch die erste Spule 110 fließt, dort einen magnetischen Fluss $\Phi_{C,1}$ erzeugt, und anschließend zu dem zweiten Anschluss 12 fließt. Ebenso wird der zweite Strom $i_2$ von dem ersten Anschluss 11 in die zweite Spule 210 geleitet, erzeugt dort einen Magnetfluss $\Phi_{C,2}$, und wird anschließend über den zweiten Anschluss 12 wieder abgeleitet.

Wie auch bei der Magnethalterung der Fig. 14 kann die Positionsabweichung des Körpers 105 zu dem ersten Magnetisierungsmodul 100 als auch die Positionsabweichung des Körpers 105 zu dem zweiten Magnetisierungsmodul 200 durch die folgende Gleichung ausgedrückt werden ($\hat{x}$ ist wie in Fig. 14 gezeigt definiert):

$$\hat{x}_n = \frac{\mu_0 A_p N}{2 U_{dc}} \left( i_{c,1,n}^{\alpha-\beta} N - i_{c,2,n}^{\alpha-\beta} N + 2 i_{b,n}^{\alpha-\beta} N_b \right), \tag{3}$$

wobei in dieser Gleichung die gleichen Bedingungen gelten, wie sie bei Gleichung (1) genannt wurden. Zusätzlich ist in dieser Gleichung die letzte Größe im Wesentlichen durch die zeitliche Ableitung des Vormagnetisierungsstroms $i_b$ gegeben ($N_b$ ist der dritten Spule 330 bzw. der vierten Spule 340), der durch das Vormagnetisierungsmodul 300 und somit durch die dritte Spule 330 und die vierte Spule 340 fließt (die zeitliche Änderungen der verschiedenen Ströme i wird auch mit "di" bezeichnet).

Diese Gleichung gilt, wenn für die Ansteuerspannung $U_c$ als auch für die Bias-Spannung $U_b$ PWM-Spannungssignale gewählt werden.

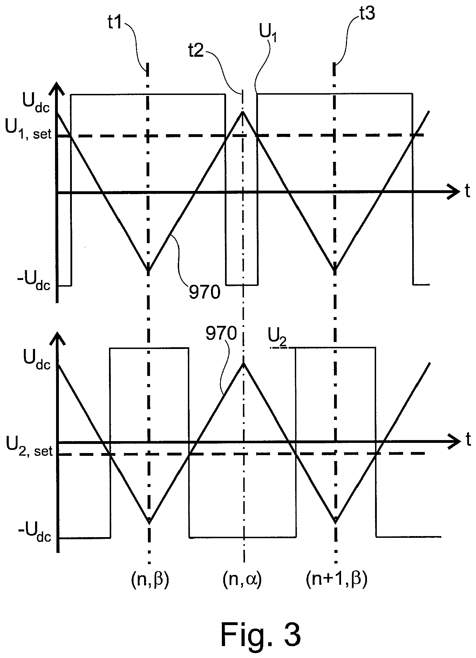

Fig. 3 zeigt ein Beispiel für PWM-Spannungssignale, wobei eine erste Spannung $u_1$ (oben) und eine zweite Spannung $u_2$ (unten) als Funktion der Zeit gezeigt sind und das erste PWM-Signal $u_1$ eine gleiche Maximalspannung $U_{dc}$ und Minimalspannung ($-U_{dc}$) aufweist wie das zweite PWM-Signal $u_2$. Jedoch ist die Pulsbreite der Maximalspannung für die ersten Spannung $u_1$ größer als die Pulsbreite für die Minimalspannung ($-U_{dc}$). Das zweite PWM-Signal für die zweite Spannung $u_2$ ist mit der ersten Spannung $u_1$ synchronisiert, und zwar derart, dass die Mittellinien für die Maximal-/Minimalspannungen des ersten PWM-Spannungssignals $u_1$ mit den Mittellinien für das zweite PWM-Spannungssignal $u_2$ zu gleichen Zeiten t1, t2, t3 auftreten.

Die Durchschnittsspannung der ersten Spannung $u_1$ ist gegeben durch $u_{1,set}$ und die Durchschnittsspannung der zweiten Spannung $u_2$ ist gegeben durch die Spannung $u_{2,set}$ wobei die erste Durchschnittspannung $u_1,set$ einen positiven Wert aufweist und die zweite Durchschnittsspannung $u_{2,set}$ einen leicht negativen Wert aufweist. Dementsprechend wird der entsprechende Elektromagnet, der mit $u_1$ angeregt wird, eine stärkere Anziehungskraft verursachen als der andere Elektromagnet, der mit $u_2$ angeregt wird, und so die entsprechende Positionskorrektur vornehmen.

Fig. 3 zeigt weiter ein Dreieck-förmiges Modulationssignal 970, welches derart gewählt ist, dass es das negative Maximum zur Zeit t1 (positive Mittenlinie) und das Maximum zur Zeit t2 (Zeitpunkt der negativen Mittenlinie) erreicht und als Zähler fungiert, der die Perioden des PWM-Signals zählt.

Das Zeitregime bei der Ansteuerung kann in Sensorperioden und Steuerperioden unterteilt werden, sodass während der Sensorperioden die zeitlichen Ableitungen der Ströme $i_1$, $i_2$ ermittelt werden und während der Steuerperiode, basierend auf den ermittelten Positionsabweichungen $\hat{x}$ nach Glg. (1) oder Glg. (3), eine entsprechende Steuerung durchgeführt wird. Um den 50%igen Arbeitszyklus sicherzustellen, der Voraussetzung für die Gültigkeit der Glg. (1) und (3) war, können während der Sensorperiode die Pulsbreiten der ersten und zweiten Spannungen $u_1$, $u_2$ gleich lang gewählt werden. Während der Steuerperiode können die Pulsbreiten der positiven Spannungssignale (oder Maximalspannungen) derart angepasst werden, dass die Positionsabweichung $x_n$ entsprechend korrigiert wird. Gleiches gilt, wenn nur eine Steuerspannung vorhanden ist (z. B. Uc in der Fig. 2). Auch für diese Ansteuerung kann während der Sensorperiode die Maximalspannung ($+U_{dc}$) gleich lang gewählt werden wie die Minimalspannung ($-U_{dc}$).

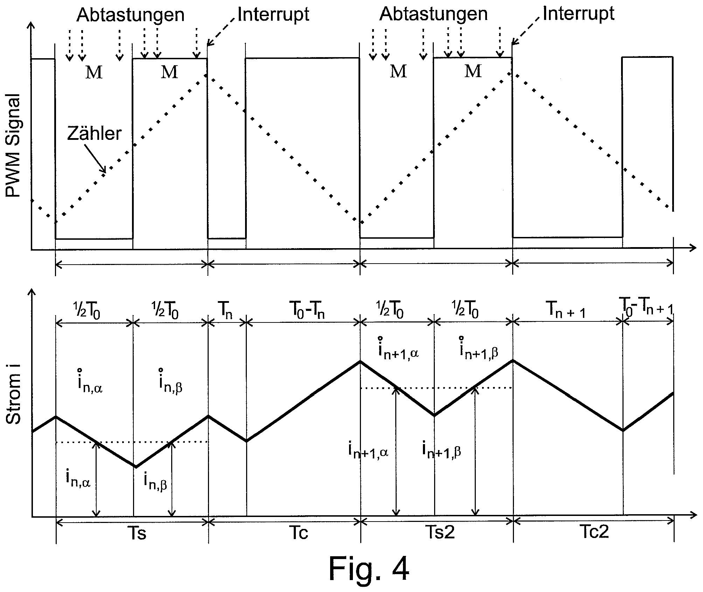

Fig. 4 zeigt eine solche Ansteuerung, bei der die Sensorperioden Ts, Ts2, .... und die Steuerperiode Tc, Tc2, ... einander abwechseln, wobei optional die Sensorperioden eine Länge T0 und die Steuerperioden optional eine gleiche Länge T0 aufweisen. Während der ersten Steuerperiode Tc wird die Länge Tn des negativen Schaltzustandes derart gewählt, um eine gewünschte Magnetkraftwirkung zu erreichen. Das PWM-Signal hat aber während der ersten Sensorperiode Ts gleiche positive und negative Pulsbreiten. Eine Abtastung der Stromwerte erfolgt beispielsweise durch M Abtastpunkte während der positiven β-Schaltzustände und während der negativen α-Schaltzustände. In der anschließenden Steuerperiode Tc wird die Pulsbreite der negativen (oder positiven) Spannung entsprechend angepasst, um dadurch die Position des Körpers 105 zu ändern.

Nach der ersten Steuerperiode Tc erfolgt eine zweite Sensorperiode Ts2 und daran anschließend eine zweite Steuerperiode Tc2. In der zweiten Sensorperiode Ts2 erfolgt eine erneute Stromerfassung und, gemäß der Gleichung (3), wird in der zweiten Steuerperiode Tc2 eine weitere Korrektur durchgeführt. In dem Beispiel der Fig. 4 liefert die Korrektur in der zweiten Steuerperiode Ts2 für die Spannung eine längere negative Pulsbreite und eine kürzere positive Pulsbreite. Diese alternierende Folge von Sensorperioden und Steuerperioden kann fortgesetzt werden, so dass eine ständige Überwachung und Anpassung der Position mit kurzen Antwortzeiten ermöglicht wird. Auch wenn das PWM-Signal in der Fig. 4 als positives Signal gezeigt ist, versteht es sich, dass die Spannungswerte derart frei gewählt werden können, um eine gewünschte magnetische Kraftwirkung zu erreichen.

In der Fig. 4 unten ist der Strom i gezeigt, der basierend auf dem Spannungssignal, welches in der Fig. 4 oben gezeigt ist, verursacht wird. Wie zu sehen ist, wird in der ersten Hälfte der Sensorperiode Ts ein negativer Stromabfall festgestellt, gefolgt von einem Stromanstieg in der zweiten Hälfte der Sensorperiode Ts. Während der Steuerperiode Tc erfolgt zunächst für eine kurze Zeit Tn ein Abfall für den Strom i, gefolgt von einem länger anhaltenden Anstieg des Stroms i für die Zeitdauer T0-Tn. Die Länge von Tn wird basierend auf der ermittelten Positionsabweichung gemäß der Gleichung (3) gewählt und hängt von den bestimmten Anstiegen der Stromkurve ab.

Um den Anstieg der Stromkurve i als Funktion der Zeit zu erfassen, können mehrere Abtastungen M (M=2, 3, 4, ...) innerhalb der Sensorperiode Ts (d.h. während des unteren Pulses und während des oberen Pulses) durchgeführt werden. Wenn mehrere Abtastungen durchgeführt wurden, kann durch eine Interpolation der erhaltenen Abtastwerte mittels einer Geraden der Anstieg des Stroms i (d. h. deren zeitliche Ableitung) ermittelt werden, der wiederum die Positionsabweichung von dem Mittelwert angibt (siehe Glg. (3)).

Für diese Ansteuer-Spannungssignale ist die Gleichung (3) gültig und liefert die Positionsabweichungen des Körpers innerhalb der Halterung. Jedoch kann man die Glg. (3) weiter vereinfachen, wenn der letzte Term, der proportional zur zeitlichen Ableitung des Vormagnetisierungsstroms $i_b$ ist, nicht berücksichtigt zu werden braucht. Eine einfache Lösung hierfür ist, dass die Bias-Spannung $U_b$ konstant gewählt wird. Im einfachsten Fall kann diese Spannung gleich Null gesetzt werden, wobei $U_b$=0 am einfachsten dadurch geschehen kann, dass der dritte und vierte Anschluss 13, 14 in der Fig. 2 kurz geschlossen werden.

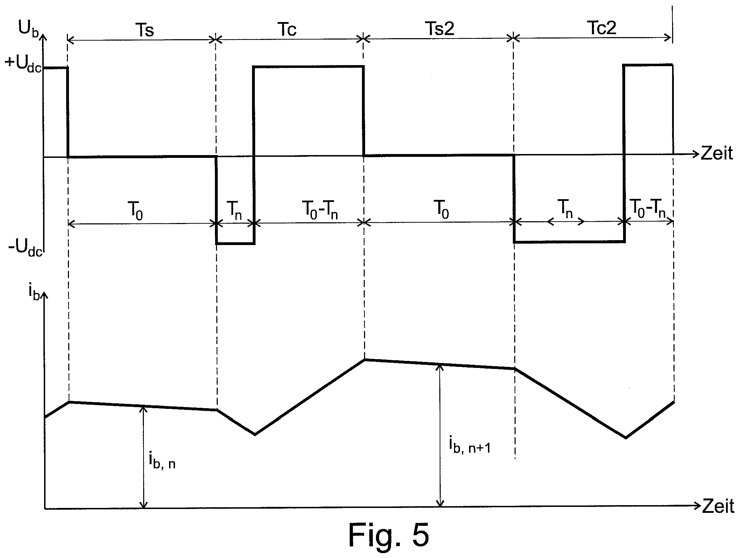

Fig. 5 zeigt ein mögliches Ausführungsbeispiel, in welchem die Bias-Spannung $U_b$ während der Sensorperiode Ts auf Null gesetzt wird. Es versteht sich, der Fall $U_b$=0 ist lediglich ein Beispiel, um die Feststellung der Positionsabweichung zu erleichtern (d.h. dass der letzte Term in Glg. (3) verschwindet), aber diese Bedingung ist nicht wesentlich und dient lediglich der Vereinfachung. Außerdem kann in anderen Beispielen die Bias-Spannung $U_b$ auf einen beliebigen konstanten Wert gesetzt werden, wodurch der gleiche Effekt erreicht wird.

Alle weiteren Steuerungen erfolgen analog, wie es in der Fig. 4 gezeigt und beschrieben wurde. Das heißt, auch das Spannungssignal $U_c$ ist durch ein PWM-Signal, wie es in der Fig. 4 gezeigt ist, gegeben, wobei während der Sensorperiode Ts die Pulsbreiten gleich gewählt sein können und die zeitlichen Ableitungen der Sensorstroms $i_s$ durch mehrere Abtastungen erfasst werden können.

Während der anschließenden Steuerperiode Tc ist die Bias-Spannung $U_b$ wieder von Null verschieden, wobei die Pulslänge Tn wieder von dem Ergebnis der Abstandsmessung in der Sensorperiode Ts abhängt, um eine festgestellte Abstandabweichung $\hat{x}$ zu kompensieren. Daran anschließend folgt wiederum eine zweite Sensorperiode Ts2, in welcher die Bias-Spannung $U_b$ erneut auf Null gesetzt wird und gleichzeitig eine Stromabtastung erfolgt, um so erneut eine Abstandabweichung zu ermitteln. In der darauffolgenden zweiten Steuerperiode Tc2 wird die Bias-Spannung $U_b$ (d.h. die Pulsbreiten für die Bias-Spannung $U_b$) analog eingestellt, wie es beispielsweise in dem oberen Spannungssignal der Fig. 4 gezeigt ist. Dieser Prozess kann fortlaufend wiederholt werden.

Bei dem Beispiel der Fig. 5 weist während der (ersten) Steuerperiode Tc die Bias-Spannung $U_b$ zunächst einen negativen Puls mit einer Spannung -$U_{dc}$ über eine Länge Tn (Steuerperiodenlänge) auf, gefolgt von einer positiven Puls mit einer Spannung +$U_{dc}$ über ein Zeitdauer von T0-Tn. Die Pulsbreiten (z.B. Tn) können derart gewählt werden, dass die gewünschte durchschnittliche Bias-Spannung $U_b$ durch das Vormagnetisierungsmodul erreicht wird, um die gewünschte magnetische Kraft zu bewirken. Es versteht sich, dass die gezeigten Werte in den Figuren 4 und 5 lediglich Beispiele sind, d.h. die Spannungen können weitgehend beliebige Werte aufweisen, solange sie den festgestellten Positionsversatz kompensieren.

Die Fig. 5 zeigt unten ebenfalls die entsprechenden Werte für den Vormagnetisierungsstrom $i_b$. Durch Vergleich des Stroms $i_b$ aus der Fig. 5 mit dem Strom i aus der Fig. 4 ist ersichtlich, dass während der Steuerperiode Tc und der zweiten Steuerperiode Tc2 die Ströme nicht geändert wurden. Jedoch sind die Ströme in den Sensorperioden nahezu konstant. Der leicht abfallende Stromwert ist eine Folge der Induktion, die durch das variable magnetische Feld verursacht wird und sich nicht vollständig abschalten lässt.

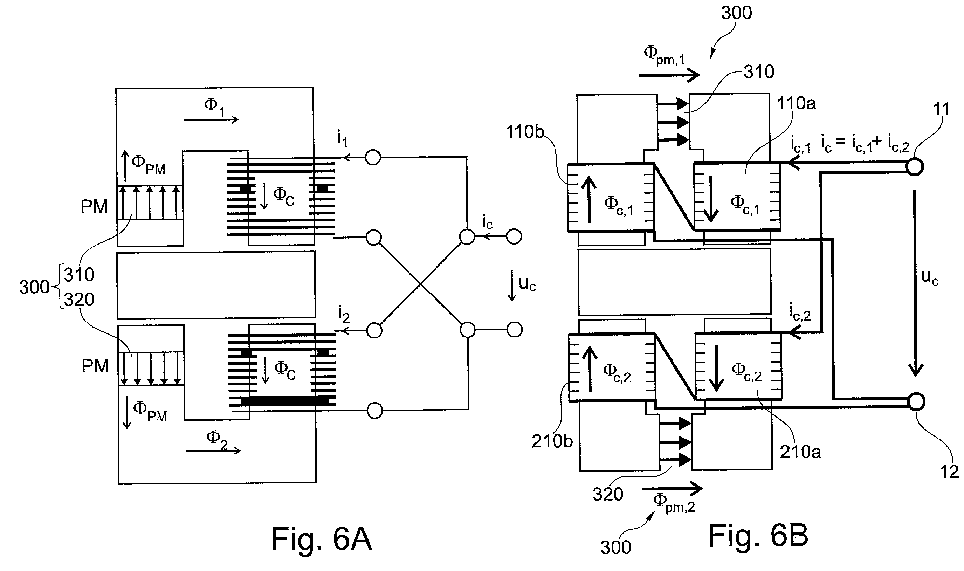

Die Fig. 6 zeigt weitere Ausführungsbeispiele, bei denen das Vormagnetisierungsmodul 300 keine Spulen aufweist, sondern Permanentmagnete. Die Permanentmagnete stellen eine einfache Lösung dar, um die Gleichung (3) zu vereinfachen, da der letzte Term identisch Null ist (es fließt überhaupt kein Strom durch das Vormagnetisierungsmodul 300).

In der Fig. 6 sind zwei Möglichkeiten mir Permanentmagneten gezeigt. In der Fig. 6A ist ein Ausführungsbeispiel gezeigt, bei dem die dritte Spule 330 der Fig. 2 durch einen ersten Permanentmagneten 310 ersetzt wurde und die vierte Spule 340 der Fig. 2 durch einen zweiten Permanentmagneten 320 ersetzt wurde. Alle weiteren Komponenten sind identisch zu dem Ausführungsbeispiel, wie es in der Fig. 2 gezeigt ist, so dass eine wiederholte Beschreibung nicht erforderlich ist.

Bei dem Ausführungsbeispiel der Fig. 6B umfasst die erste Spule 110 des ersten Magnetisierungsmodul 100 einen ersten Spulenabschnitt 110a und einen zweiten Spulenabschnitt 110b, die beide seriell verbunden sind, sodass durch beide Spulenabschnitte 110a,b der erste (Steuer-) Strom $i_{c,1}$ fließt. Der erste Spulenabschnitt 110a und der zweite Spulenabschnitt 110b sind jeweils um einen Schenkel eines gemeinsamen U-förmigen ersten Spulenkerns 115 gewickelt, wobei die beiden Schenkel mittels des ersten Permanentmagneten 310 miteinander verbunden sind.

Ebenso umfasst die zweite Spule 210 des zweiten Magnetisierungsmoduls 200 einen ersten Spulenabschnitt 210a und einen zweiten Spulenabschnitt 210b, die beide seriell verbunden sind, sodass durch beide Spulenabschnitte 210a,b der zweite (Steuer-) Strom $i_{c,2}$ fließt. Der erste Spulenabschnitt 210a und der zweite Spulenabschnitt 210b des zweiten Magnetisierungsmoduls 200 sind jeweils um einen Schenkel eines gemeinsamen U-förmigen zweiten Spulenkerns 215 gewickelt, wobei die beiden Schenkel mittels des zweiten Permanentmagneten 320 miteinander verbunden sind.

Wie in der Fig. 2 auch fließt der erste Strom $i_{c,1}$ und der zweite Strom $i_{c,2}$ von dem ersten Anschluss 11 zu dem zweiten Anschluss 12, zwischen denen die Steuerspannung anlegbar ist.

Ein besonderer Vorteil der Ausführungsbeispiele der Fig. 6 besteht darin, dass ein weiterer Vorverstärker für die Bias-Spannung $U_b$ bzw. den Vormagnetisierungsstrom $i_b$ nicht erforderlich ist, da das Vormagnetisierungsmodul 300 durch Permanentmagneten gebildet wird und kein Strom zu detektieren ist.

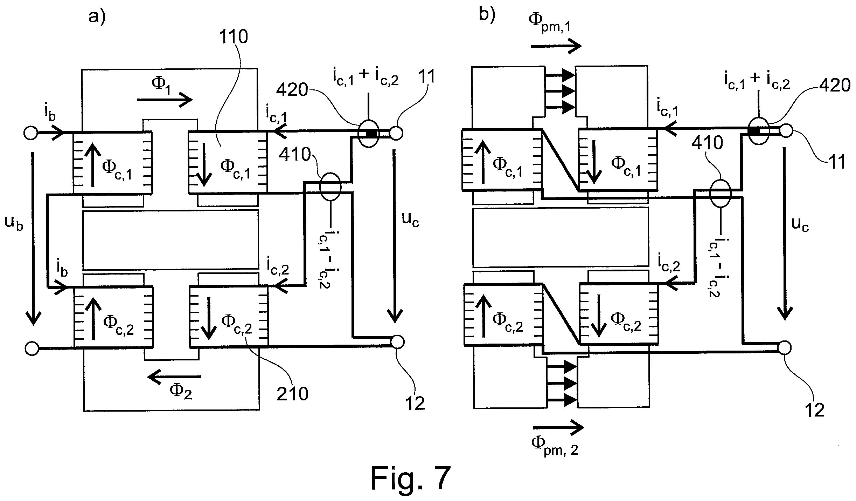

Fig. 7 zeigt eine mögliche Anordnung der Stromsensoren, wobei die Spulenanordnung a) gleich ist zu der Spulenanordnung, wie sie in dem Ausführungsbeispiel der Fig. 2 gezeigt ist und die Spulenanordnung b) gleich ist zu dem Ausführungsbeispiel der Fig. 6B.

Gemäß dem Ausführungsbeispiel der Fig. 7 wird die Differenz des ersten und zweiten Stroms $i_{c,1}$-$i_{c,2}$ durch einen ersten Stromsensor 410 gemessen. Der erste Stromsensor 410 ist am Wickelende 112 der ersten Spule 110 angeordnet und erfasst dort den ausgehenden ersten Strom $i_1$ zusammen mit dem zweiten Strom $i_2$, der zur zweiten Spule 210 fließt. Aus der unterschiedlichen Stromrichtung des von der ersten Spule kommenden Stroms $i_1$ und des zur zweiten Spule hin fließenden Stroms $i_2$ wird automatisch der Differenzstrom $i_1$-$i_2$ gemessen.

Der zweite Stromsensor 420 erfasst die Summe des ersten und zweiten Stroms $i_{c,1}$+$i_{c,2}$ und ist an dem ersten Anschluss 11 angeordnet. Somit erfasst er den ersten Strom $i_1$, der zur ersten Spule 110 fließt zusammen mit dem zweiten Strom $i_2$, der zur zweiten Spule 210 fließt.

Alle weiteren Komponenten sind gleich zu den Komponenten, wie sie mit den Fign. 2 und 6B bereits beschrieben wurden, sodass hier eine erneute Beschreibung nicht erforderlich ist.

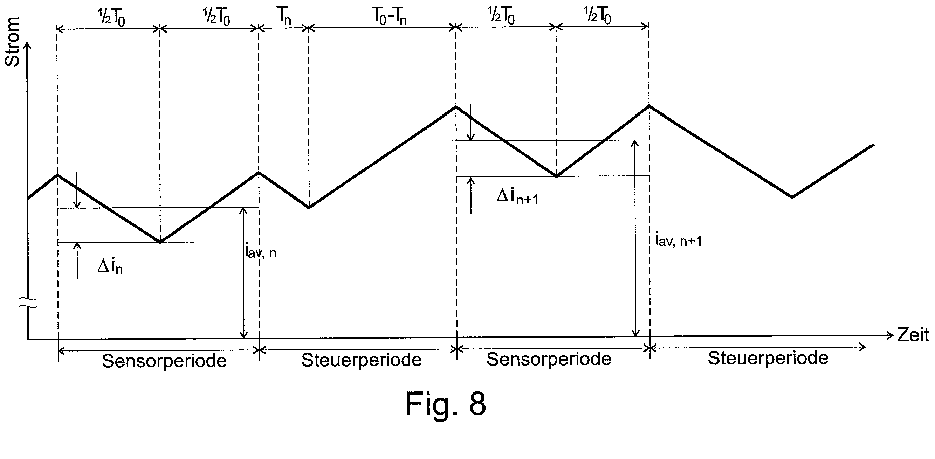

Fig. 8 veranschaulicht die Schwankungsbreite des Stroms $\Delta i$ relativ zum Durchschnittswert $i_{av,n}$ (zur Zeit tn). Wie zuvor beschrieben, wird während der Sensorperioden Ts der Strom durch Mehrfachabtastung gemessen, wobei für jede Periode n ein Durchschnittswert $i_{av,n}$ für den Strom i gebildet werden kann. Die Periodenlängen $T_0$ der Sensorperioden Ts und der Steuerperioden sind wiederum alle gleich lang gewählt worden, obwohl dies nicht wesentlich ist. In anderen Ausführungsbeispielen können die Perioden anders gewählt werden.

Für die Gleichung (3) ist eine hohe Genauigkeit bei der Messung des Stromanstieges oder Stromabfalles wünschenswert. Andererseits ist für eine digitale Steuerung der Durchschnittsstromwert in einem Zyklus von Interesse. Der gemessene Strom bei einer Nutzung von PWM-Leistungsverstärkern weist jedoch eine Schwankungsbreite auf, die um den Durchschnittswert des Stroms herum schwankt, wobei der Durchschnittswert des Stroms die typische Messgröße ist, die zur Positionsbestimmung oder Positionskorrektur genutzt wird. Eine hohe Sensitivität wird erreicht, wenn festzustellenden Stromänderungen (gemäß Glg. (3)) zum Sensorsignal selbst relativ groß sind. Damit kann das Signal-Rausch-Verhältnis (SNR) verbessert werden.

Die bisher beschriebenen Ausführungsbeispiele umfassen eine Mehrfachabtastung zur Bestimmung der Änderung des Stroms. Da die Mehrfachabtastung sehr schnelle ADC benötigt und der entsprechend Rechenaufwand für die Bestimmung der Stromableitung groß ist, ist der Steuermodul 400 auch teuer, da schnelle Mikrokontroller benötigt werden, um in Realzeit eine Korrektur durchzuführen. Die sensorlose Technik kann auch mit günstigeren, langsameren ADC und Mikrokontrollern realisiert werden, wenn das Transformator Konzept eingesetzt werden, das im Folgenden beschrieben wird.

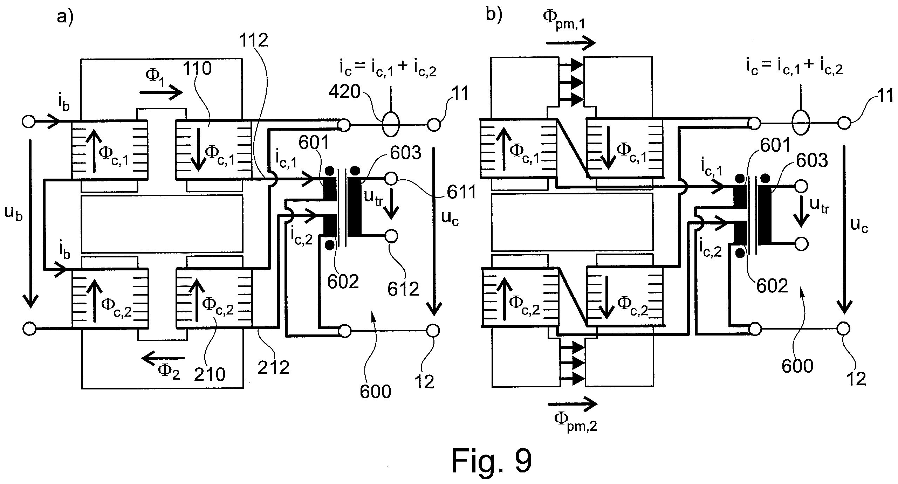

Fig. 9a,b zeigen Ausführungsbeispiele zur Erfassung der zeitlichen Änderung des ersten Stroms $i_1$ und des zweiten Stromes $i_2$. Sie unterscheiden sich von den Ausführungsbeispielen der Fig. 7 lediglich dadurch, dass der erste Stromsensor 410 durch einen Transformator 600 ersetzt wurde. Der zweite Stromsensor 420 kann auch in diesem Ausführungsbeispiel (analog zur Fig. 7) vorhanden sein. Alle übrigen Komponenten sind ebenfalls gleich zu jenen Komponenten, wie sie in der Fig. 7 bereits beschrieben wurden, so dass eine wiederholte Beschreibung hier nicht nötig ist. Das Ausführungsbeispiel der Fig. 9a entspricht der Fig. 7a und das Ausführungsbeispiel der Fig. 9b entspricht der Fig. 7b.

Der Transformator 600 weist eine erste Primärspule 601, eine zweite Primärspule 602 und eine Sekundärspule 603 auf, die über einen gemeinsamen Spulenkern 604 magnetisch miteinander gekoppelt sind. Die erste Spule 601 ist elektrisch zwischen dem zweiten Spulenende 112 der ersten Spule 110 und dem zweiten Anschluss 12 geschaltet. Die zweite Spule 602 ist elektrisch zwischen dem zweiten Spulenende 212 der zweiten Spule und dem zweiten Anschluss 12 geschaltet. Die Sekundärspule 603 ist zwischen einem ersten Sensoranschluss 611 und einem zweiten Sensoranschluss 612 elektrisch geschaltet.

Somit wird beim Anlegen des Spannungssignals $U_c$ ein Strom $i_c$ beispielsweise über den ersten Anschluss 11 in das Magnetlager hinein fließen, wobei der Strom $i_c$ sich in einen ersten Strom $i_1$, der in die erste Spule 110 hinein fließt, und einen zweiten Strom $i_2$, der in die zweite Spule 210 hinein fließt, teilt. Nach dem Passieren der ersten Spule 110 fließt der erste Strom $i_1$ in die erste Primärspule 601 des Transformators 600 und wird danach zu dem zweiten Anschluss 12 abgeleitet. Der zweite Strom $i_2$ fließt nach dem Passieren der zweiten Spule 210 in die zweite Primärspule 602 des Transformators 600 und wird daran anschließend ebenfalls über den zweiten Anschluss 12 abgeleitet.

Bei weiteren Ausführungsbeispielen ist die erste Primärspule 601 an einer anderen Position entlang des Strompfades des ersten Stroms $i_1$ und/oder die zweite Primärspule 602 ist an einer anderen Position entlang des Strompfades des zweiten Stroms $i_2$ angeordnet. Auf die genaue Position oder Stromführung kommt es nicht an, solange eine zeitliche Änderung der Ströme durch den Transformator 600 erfassbar ist.

Eine zeitliche Änderung des ersten Stroms $i_1$ und des zweiten Stroms $i_2$ bewirkt, dass ein Magnetfeld in dem Transformator induziert wird, welches in der Sekundärspule 603 einen Strom induziert, der als ein Sensorspannungssignal $u_{tr}$ zwischen dem ersten Sensoranschluss 611 und dem zweiten Sensoranschluss 612 als Sensorsignal abgegriffen werden kann.

Damit der Transformator sensitiv auf eine Differenz der zeitlichen Änderungen der Ströme $i_1$ und $i_2$ ist, kann beispielsweise die Stromrichtung oder die Wicklung derart gewählt sein, dass der erste Strom $i_1$ durch die erste Primär-

spule 601 eine erste Magnetfeldkomponente erzeugt und der zweite Strom $i_2$ durch die zweite Primärspule 602 eine zweite Magnetfeldkomponente erzeugt, wobei die erste und zweite Magnetfeldkomponenten für gleiche Stromstärken gleich groß, aber entgegengesetzt zueinander sind und sich somit kompensieren. Damit wird der Transformator 600 sensitiv für relative Stromschwankungen in dem ersten und dem zweiten Strom $i_1$, $i_2$ (bzw. deren zeitlichen Variationen), die sich nicht gegenseitig kompensieren und ein eine Positionsänderung des Körpers 105 anzeigen.

Damit wird erreicht, dass ein Sensorsignal $u_{tr}$ nur dann erzeugt wird, wenn eine Positionsabweichung $\hat{x}$ vorliegt, die zu korrigieren wäre.

Der gleiche Effekt wird auch erreicht, wenn die erste Primärspule 601 in der gleichen Richtung gewickelt ist wie die zweite Primärspule 602, aber die Stromrichtung umgekehrt gewählt wird. Beispielsweise können die Anschlüsse an der zweiten Primärspule 602 ausgetauscht werden, so dass der Strom von der zweiten Spule 210 zunächst in dem unteren Anschluss der zweiten Primärspule 602 fließt, und dann in eine Richtung hin zur ersten Primärspule 601 die zweite Primärspulspule 602 durchfließt.

Auch diese Anordnung bewirkt, dass der Transformator 600 sensitiv auf eine Differenz der zeitlichen Änderung des ersten Stromes $i_1$ und der zeitlichen Änderung des zweiten Stromes $i_2$ ist, sodass das gewünschte Sensorsignal zwischen dem ersten Sensoranschluss 611 und dem zweiten Sensoranschluss 612 als eine Sensorspannung $u_{tr}$ abgegriffen werden kann.

Das Sensorspannungssignal $u_{tr}$ ist proportional zur zeitlichen Änderung der Differenz zwischen dem ersten Strom $i_1$ und dem zweiten Strom $i_2$. Daher kann die Positionsabweichung des Körpers z.B. unter Verwendung der vorstehend erwähnten Gleichung (1) in Abhängigkeit von dem Sensorspannungssignal ermittelt werden.

Dabei ist es besonders vorteilhaft, wenn die Amplitude des Sensorspannungssignals $u_{tr}$ sowie die Phasenverschiebung des Sensorspannungssignals $u_{tr}$ in Bezug auf das erste Spannungssignal $u_c$ ermittelt wird. Die Amplitude ist proportional zu der Positionsabweichung, so dass die gesuchte Positionsabweichung aus der Amplitude und einem vorgegebenen oder vorgebbaren Faktor (vgl. z.B. Gleichung (1)) ermittelt werden kann. Anhand der Phasenverschiebung kann ferner die Richtung der Positionsabweichung ermittelt werden, also ob der Körper in Richtung der ersten Spule 110 oder in Richtung der zweiten Spule 210 gegenüber der Referenzstellung ausgelenkt ist.

In der Fig. 9b ist die Wirkung des Transformators 600 gleich der Wirkung des Transformators 600, wie in der Fig. 9a gezeigt ist. Wiederum ist der Transformator 600 sensitiv auf eine Differenz der zeitlichen Variationen des ersten und des zweiten Stromes $i_1$, $i_2$. Auch hier wird eine Sensorspannung erzeugt, die proportional ist zu der zeitlichen Änderung des ersten Stromes $i_1$ und des zweiten Stromes $i_2$. Eine wiederholte Beschreibung ist daher hier nicht erforderlich.

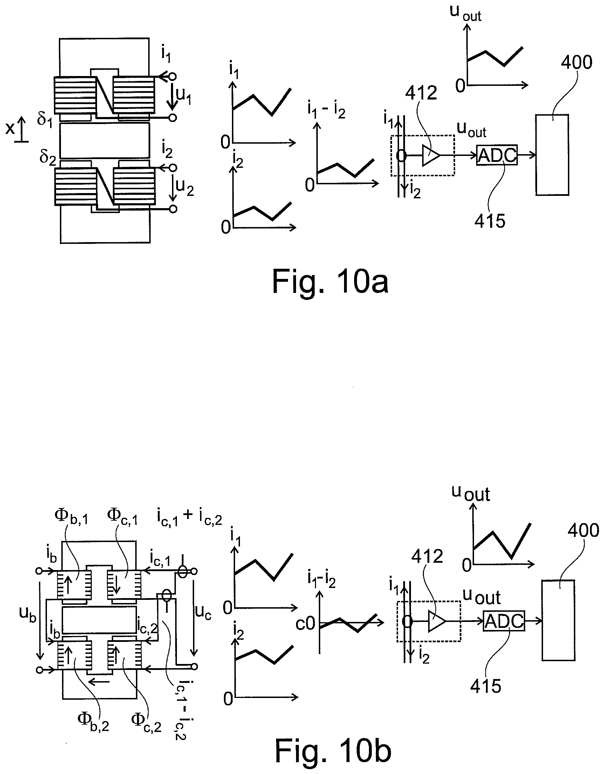

Fig. 10A,B zeigen Auswerteschaltungen für eine Differenzansteuerung (Fig. 10A) und für eine parallele Differenzwicklung (Fig. 10B).

Fig. 10A zeigt links zunächst die Differenzansteuerschaltung und dann mittig zwei exemplarische Ströme (Stromprobe) $i_1$ und $i_2$, wobei $i_1 = i_0 + i_c + \Delta i$ und $i_2 = i_0 - i_c - \Delta i$, sodass $i_1 - i_2 = 2i_c + 2\Delta i$. Der Stromsensor ist hierbei abgestimmt auf $\pm 2i_{c,max}$. In diesem Beispiel sind in der Mittenposition die Ströme nicht gleich groß, sodass die Stromdifferenz nicht um Null herum schwankt.

Fig. 10B zeigt ebenfalls links die Schaltung und dann mittig wiederum zwei exemplarische Ströme $i_1$ und $i_2$, wobei in diesem Fall gilt: $i_1 = 1/2\, i_c + \Delta i$ und $i_2 = 1/2\, i_c - \Delta i$, sodass $i_1 + i_2 = i_c$ und $i_1 - i_2 = 2\Delta i$. Der Stromsensor ist hierbei abgestimmt auf $\pm 2\Delta i_{max}$. In diesem Beispiel sind in der Mittenposition die Ströme gleich groß, sodass die Stromdifferenz um Null herum schwankt. Unabhängig von der Verschaltung gilt: $\Delta i \sim x$ und $\Delta i \rightarrow 0$.

Wenn man diese Ströme selbst messen würde und dann aus den Messergebnissen den Differenzstrom bilden würde, hätte dies ein schlechtes SNR zur Folge, da die Stromschwankungen, die in die Glg. (3) eingehen, relativ klein sind zum Strom selbst. Von daher ist es besser, direkt die Stromdifferenz zu messen und diese Messgröße zu verstärken. Die Messgenauigkeit der parallelen Differenzwicklung ist somit weiter erhöht, da der erste und zweite Strom $i_1$, $i_2$ im Wesentlichen gleich groß sind, wenn der Körper im Gleichgewicht ist und keine Korrektur erforderlich ist. Somit erscheinen die relevanten Positionsabweichungen als kleine Variationen der Stromdifferenz um den Nullpunkt herum. Im Gegensatz hierzu schwankt die Stromdifferenz in der Fig. 10A nicht um den Nullpunkt, sondern um einen Wert größer als Null.

Eine solche Eichung der Ströme kann erreicht werden, wenn die Induktivität des ersten Magnetisierungsmoduls im Gleichgewicht gleich ist zu der Induktivität des zweiten Magnetisierungsmodul. Da die Spannungen an der ersten Spule 110 und der zweiten Spule 210 gleich sind, hätte dies zur Folge, dass auch der erste und zweite Strom im Gleichgewicht gleich sind. Wenn jedoch kein Gleichgewicht vorliegt, d.h. der Körper befindet sich nicht in der gewünschten Mittenposition, werden Stromänderungen erzeugt, die verschieden voneinander sind und eine nichtverschwindende Messgröße liefern.

Daher erfasst der erste Stromsensor 410 in der Fig. 10B direkt die Differenz aus beiden Strömen $i_1$-$i_2$ (bzw. deren zeitlichen Änderungen) als Sensorgröße. Das kann beispielsweise dadurch geschehen, dass beide Ströme mit entgegengesetzter Flussrichtung den ersten Stromsensor 410 passieren. Das somit um Null schwankende Sensorsignal von $i_1$-$i_2$ (siehe Fig. 10B) wird nach der Strommessung durch einen Operationsverstärker 412 verstärkt und als Ausgabespannung $u_{out}$ an einen Analog-Digital-Wandler 415 übermittelt. Danach kann das digitale Signal in einem Steuermodul 400 ausgewertet werden, welches basierend darauf, die PWM-Signale, wie oben beschrieben, ändert. Diese Auswerteschaltung für die parallele Differenzwicklung (Fig. 10B) ist der Fig. 10A in gleicher Weise ausgebildet. Da in der Fig. 10A nicht die Stromschwankung, sondern auch der Mittelwert (um den der Strom schwankt) verstärkt wird, ist allerdings die Sensitivität der Differenzansteuerung im Vergleich zu parallelen Differenzwicklung kleiner.

Der erreichbare Vorteil wird auch aus dem Folgenden deutlich. Der Durchschnittsstrom hat einen typischen Bereich von einigen 10 A, während die Schwankungsbreite meistens in einer Region von einem halben Ampere liegt. Außerdem basiert die Positionsabschätzung der Körpers 105 auf einer Detektion von kleinen oder winzigen Änderungen der Amplitude des schwankenden Stroms, welche typischerweise eine Größenordnung von einigen 10 mA aufweist. Daher kann die Summe des ersten und des zweiten Stroms $i_1 + i_2$ in einem Bereich zwischen -10 Ampere und +10 Ampere liegen, während die Differenz zwischen dem ersten Strom und dem zweiten Strom in einem Bereich zwischen -1 A und 1 A liegen kann.

Eine direkte Verstärkung der Stromdifferenz (d.h. dieses kleinen Bereiches) und nicht der Einzelströme, führt daher zu der deutlichen Verbesserung des Signalrauschverhältnisses und diese Verbesserung wird durch das oben beschriebene Design für die Strommessung erreicht.

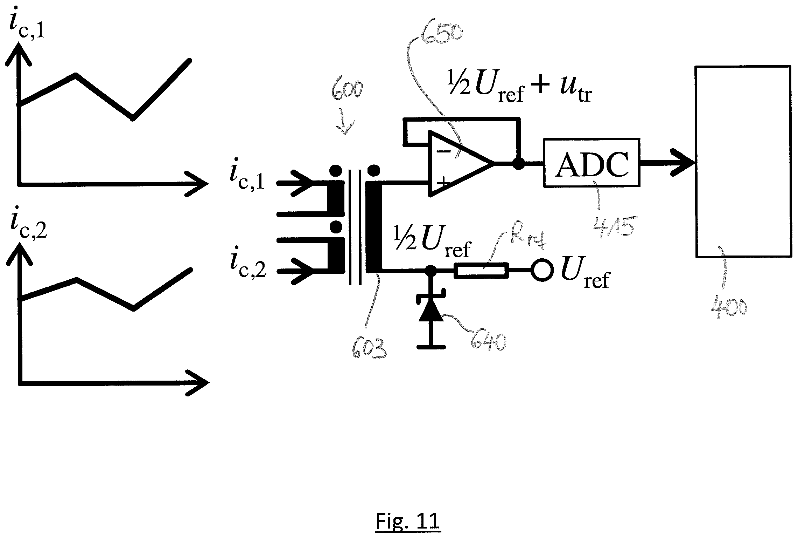

Die Fig. 11 zeigt eine analoge Sensorerfassung, wie sie in den Fig. 10A,B für die Mehrfachstromabtastung gezeigt ist. Wiederum ist links zunächst ein beispielhafter Stromverlauf für den ersten Strom $i_1$ und den zweiten Strom $i_2$ gezeigt. Der Transformator 600 erfasst die Kombination beider Ströme, wie es oben beschrieben wurde. An der Sekundärspule 603 ist ein Spulenende über einen Referenzwiderstand $R_{ref}$ an einer Referenzspannung $U_{ref}$ angeschlossen, sodass die an der Sekundärspule anliegende Spannung beispielsweise ½$U_{ref}$ ist. Zwischen dem Referenzwiderstand $R_{ref}$ und der Sekundärspule 603 ein Zener-Diode 640 auf Masse geschaltet, um ein stabilisiertes Spannungsniveaus an der Sekundärspule 603 bereitzustellen. Das gegenüberliegende Spulenende der Sekundärspule 603 ist an einen Operationsverstärker 650 angeschlossen, der das Signal verstärkt und, wie in den Fig. 10A, B auch, einem Analog-Digital-Wandler 415 zuleitet, der wiederum ein digitales Sensorsignal für das Steuermodul 400 bereitstellt.

Die galvanische Trennung zwischen den Primärspulen 601, 602 und der Sekundärspule 603 bringt insbesondere Vorteile bei der Ermittlung einer Positionsabweichung des Körpers, da dadurch die Spannung $u_{tr}$ weniger verrauscht wird. Durch die Ausgestaltung des sekundärspulenseitigen Stromkreises fließt auf der Sekundärseite kaum bzw. nur ein geringer Strom, so dass dieser Stromkreis gewissermaßen einen offenen Kreislauf ("o-pen circuit") bildet und das Signal-Rausch-Verhältnis für das Spannungssignal $u_{tr}$ verringert werden kann. Eine komplizierte Verstärkung kann somit vermieden werden.

Der mit den Fig. 10A,B beschriebene Vorteil der parallelen Differenzwicklung gilt auch für das Transformator-Stromerfassung, da ansonsten bei der Differenzansteuerung durch den bleibenden Strom $2i_c$ der Transformatorkern so stark gesättigt wird, dass das Trafokonzept nicht praktisch ist. Die kleinen Stromschwankungen um Null herum, verhindern eine Sättigung, sodass die schnellen Ummagnetisierungen kein Problem darstellen.

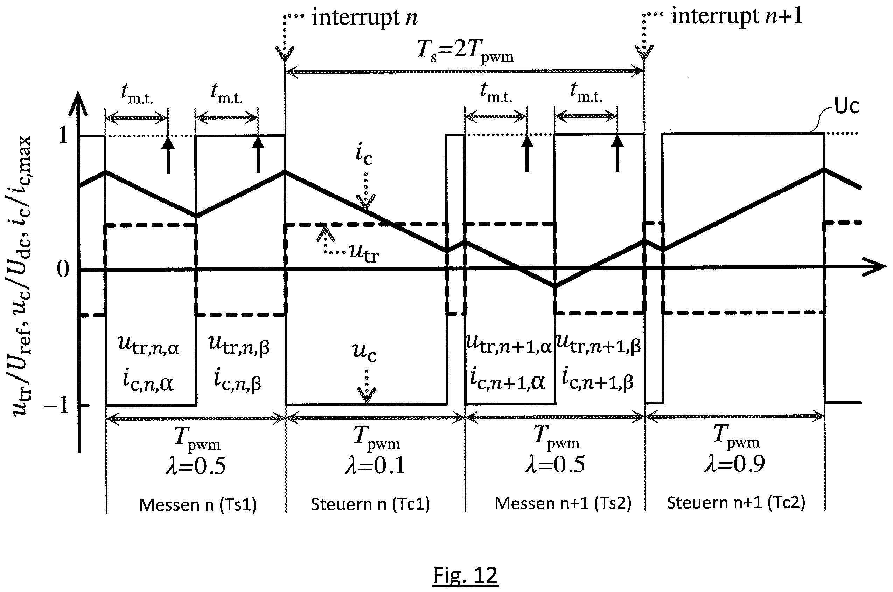

Fig. 12 zeigt einen zeitlichen Verlauf des Stromes $i_c$, der Sensorspannung $u_{tr}$ (Transformatorspannung) und des Spannungssignals $U_c$. Der zeitliche Verlauf ist wiederum unterteilt in Sensorperioden Ts (wo gemessen wird) und Steuerperioden Tc (wo gesteuert wird), die einander abwechseln. Wie zuvor auch, wurden beide Perioden gleich gewählt, was jedoch nicht zwingend erforderlich ist. Das Spannungssignal $U_c$ ist wiederum ein PWM-Spannungssignal, wobei in den Sensorperioden Ts die Breiten des PWM-Signals gleich gewählt sind. So ist beispielsweise in der ersten Sensorperiode Ts1 ein negativer und ein positiver Puls des Spannungssignals vorhanden. Während des negativen Pulses α fällt der Strom $i_c$ ab und in dem positiven Puls β steigt das Stromsignal $i_c$ wiederum an. Die sich ändernde Stromdifferenz zwischen dem ersten und dem zweiten Strom $i_1$ und $i_2$ induziert eine Sensorspannung $u_{tr}$, die während des negativen Pulses α einen positiven Wert aufweist und während des positiven Pulses β einen negativen Wert aufweist. Beide Sensorspannungen $u_{tr,\alpha}$, $u_{tr,\beta}$ werden erfasst und können nach Umrechnung in zeitlichen Änderungen und unter Nutzung der Gleichung (3) genutzt werden, um die Positionsabweichung $\hat{x}$ zu bestimmen.

Während der ersten Steuerperiode Tc1 wird das Spannungssignal $U_c$ entsprechend dem detektierten Sensorsignal $u_{tr}$ mit einer variablen Breite gewählt (wie auch in den zuvor beschriebenen Ausführungsbeispielen). Die Breite des negativen Signals ist beispielsweise deutlich breiter als die Breite des positiven Signals. Folglich fällt der Strom $i_c$ während des negativen Pulses deutlich länger ab bis der positive Puls folgt, wo es zu einem kleinen Anstieg des Stromes $i_c$ kommt. In der folgenden zweiten Sensorperiode Ts2 ist wiederum die Pulsbreite des Spannungssignals $U_c$ gleich gewählt und die Sensorspannung $u_{tr}$ wird sowohl während des negativen Pulses α als auch während des positiven Pulses β gemessen. Das gemessene Sensorsignal $u_{tr}$ signalisiert wiederum eine Positionsänderung $\hat{x}$, die zu korrigieren ist, was wiederum durch eine Änderung der Breiten des PWM-Signals während der zweiten Steuerperiode Tc2 erreicht wird.

Somit bleibt beim Transformatorkonzept das Antreiben des Magnetlagers mit $U_c$ und das Erfassen des Summenstroms $i_c=(i_1+i_2)$ unberührt. Zur Positionsschätzung wird jedoch nicht mehr der Differenzstrom $(i_1-i_2)$ mehrfach abgetastet, um daraus die Stromableitung zu berechnen, sondern die Transformatorspannung $u_{tr}$ der sekundäre Seite wird in einer Sensorperiode einmal in der α-Periode und einmal in der β-Periode wie in der Fig. 12 abgetastet. Die zwei Spannungen $u_{tr,\alpha}$ und $u_{tr,\beta}$ reichen bereits aus, um die geschätzte Position $\hat{x}$ zu bestimmen.

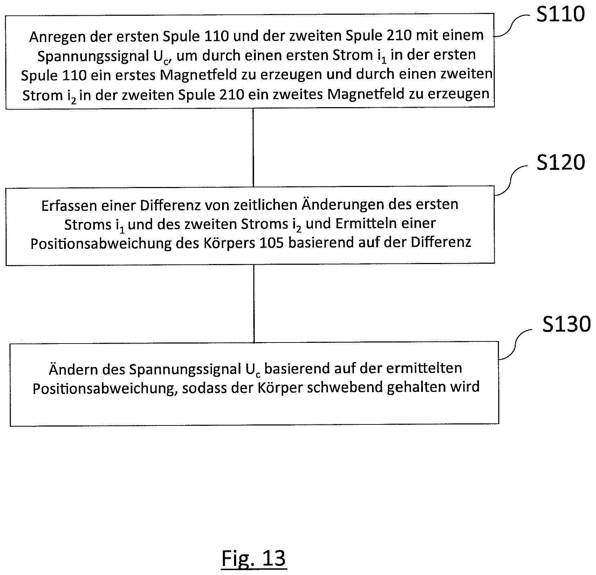

Fig. 13 zeigt ein Flussdiagramm für ein erfindungsgemäßes Verfahren zum kontaktlosen Halten des Körpers 105 zwischen einem ersten Magnetisierungsmodul 100 mit einer ersten Spule 110, einem zweiten Magnetisierungsmodul 200 mit einer zweiten Spule 210 und einem Vormagnetisierungsmodul 300, das eine Vormagnetisierung bereitstellt, wobei die erste Spule 110 und die zweite Spule 210 parallel mit einem ersten und zweiten Anschluss 11, 12 verbunden sind. Das Verfahren umfasst ein Anregen S110 der ersten Spule 110 und der zweiten Spule 210 mit einem Spannungssignal $U_c$ an dem ersten und zweiten Anschluss 11, 12, um durch einen ersten Strom $i_1$ in der ersten Spule 110 ein erstes Magnetfeld zu erzeugen und durch einen zweiten Strom $i_2$ in der zweiten Spule 210 ein zweites Magnetfeld zu erzeugen. Außerdem umfasst das Verfahren ein Erfassen S120 einer Differenz von zeitlichen Änderungen des ersten Stroms $i_1$ und des zweiten Stroms $i_2$ und Ermitteln einer Positionsabweichung $\hat{x}$ des Körpers 105 basierend auf der Differenz. Schließlich umfasst das Verfahren ein Ändern S130 des Spannungssignal $U_c$ basierend auf der ermittelten Positionsabweichung $\hat{x}$, sodass der Körper 105 durch ein Gleichgewicht des ersten Magnetfeldes, des zweiten Magnetfeldes und der Vormagnetisierung in einem kontaktlosen Zustand zwischen dem ersten Magnetisierungsmodul 100, dem zweiten Magnetisierungsmodul 200 und dem Vormagnetisierungsmodul 300 schwebend gehalten wird.

Die zeitlichen Änderungen des ersten Stroms $i_1$ und des zweiten Stroms $i_2$ können mit einer Mehrfachabtastung einer Kombination des ersten Stroms $i_1$ und des zweiten Stroms $i_2$ ermittelt werden. Die zeitlichen Änderungen können auch mit einem Transformator 600, der durch eine Kombination des ersten Stroms $i_1$ und des zweiten Stroms $i_2$ auf seiner Primärseite angeregt wird, erfasst werden.

Außerdem kann das Verfahren ein Erfassen eines Summenstromes aus dem erste Strom $i_1$ und dem zweiten Strom $i_2$ umfassen, und die Änderung des Spannungssignal $U_c$ kann ferner basierend auf dem erfassten Summenstrom durchgeführt werden.

Die genannte Reihenfolge der Schritte impliziert keine zeitliche Abfolge oder nur insoweit, wie es zwingend erforderlich ist. Das Verfahren kann auch auf einen Computer in Form von Software implementiert sein und eine Ansteuerung des Magnetlagers durchführen.

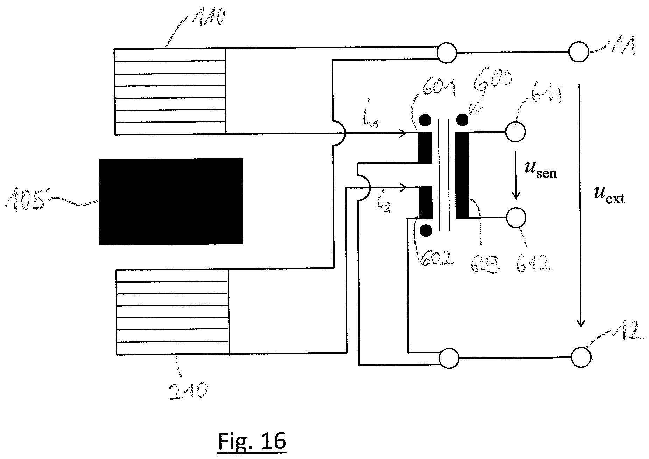

Die Ausgestaltung der Fig. 16 entspricht im Wesentlichen der Ausgestaltung der Fig. 9a, wobei bei der Ausgestaltung der Fig. 16 die erste Spule 110 und die zweite Spule 210 Luftspulen sind, also kein Eisenkern vorhanden ist. Die weiteren in Fig. 9a gezeigten Spulen können ebenfalls vorhanden und z.B. auch kurzgeschlossen sein (vgl. die Ausführungen zu Fig. 2). Wie zuvor in Bezug auf die Fig. 9a beschrieben wurde, kann die Ausgestaltung der Fig. 16 mit dem Transformator 600 dazu verwendet werden, die Differenz der zeitlichen Änderung des ersten Stroms $i_1$ und des zweiten Stroms $i_2$ zu ermitteln, und zwar in Form des mittels der Sekundärspule 603 des Transformators 600 erzeugten induzierten Spannungssignals $u_{sen}$, das auch als Sensorspannung bezeichnet wird. Durch Bestimmung der Amplitude des Spannungssignals $u_{sen}$ und dessen Phasenverschiebung relativ zu dem ersten Spannungssignal $u_{ext}$, mit welchem die erste Spule 110 und die zweite Spule 210 parallel zueinander versorgt werden, kann wiederum die Referenzposition des Körpers 105 nach Betrag und Richtung in Bezug auf seine Mittenposition zwischen den beiden Spulen 110, 210 bestimmt werden.

Die in der Beschreibung, den Ansprüchen und den Figuren offenbarten Merkmale der Erfindung können sowohl einzeln als auch in beliebiger Kombination für die Verwirklichung der Erfindung wesentlich sein.

Bezugszeichenliste

| | |
|---|---|
| 11 | erster Anschluss |
| 12 | zweiter Anschluss |
| 100 | erstes Magnetisierungsmodul |
| 105 | Körper |
| 110 | erste Spule des erstes Magnetisierungsmodul |
| 111 | erstes Spulenende |
| 112 | zweites Spulenende |
| 115 | erster Spulenkern |
| 200 | zweites Magnetisierungsmodul |
| 210 | zweite Spule des zweites Magnetisierungsmodul |
| 211 | erstes Spulenende |
| 212 | zweites Spulenende der zweiten Spule |
| 215 | zweiter Spulenkern |
| 300 | Vormagnetisierungsmodul |
| 310, 320 | Permanentmagnet des Vormagnetisierungsmoduls |
| 330, 340 | Spulen des Vormagnetisierungsmoduls |
| 400 | Steuermodul |

| | |
|---|---|
| 410 | erster Stromsensor |
| 420 | zweiter Stromsensor |
| 600 | Transformator |
| 601 | erste Primärspule |
| 602 | zweite Primärspule |
| 603 | Sekundärspule |
| 650 | Operationsverstärker |
| 970 | Modulationssignal |
| R | zumindest eine Richtung |
| $i_1$ | erster elektrischer Strom |
| $i_2$ | zweiter elektrischer Strom |
| $i_b$ | Vormagnetisierungsstrom |
| $U_b$ | Bias-Spannungssignal |
| $U_c$, $U_{ext}$ | Spannungssignal |
| $u_{tr}$, $u_{sen}$ | Sensorspannung |
| Ts | Sensorperiode |
| Tc | Steuerperiode |
| $\hat{x}$ | Positionsabweichung |

**Patentansprüche**

1. Magnetlager zum kontaktlosen Halten eines Körpers (105) in zumindest einer Richtung (R) mittels eines Magnetfeldes, mit folgenden Merkmalen:

   einem ersten Anschluss (11) und einem zweiten Anschluss (12), zwischen denen ein Spannungssignal ($U_c$) anlegbar ist;
   einem ersten Magnetisierungsmodul (100) mit einer ersten Spule (110) mit einem ersten Spulenende (111), das mit dem ersten Anschluss (11) elektrisch verbunden ist, und einem zweiten Spulenende (112), das mit dem zweiten Anschluss (12) elektrisch verbunden ist, so dass beim Anliegen des Spannungssignals ($U_c$) ein erster elektrischer Strom ($i_1$) durch die erste Spule (110) ein erstes Magnetfeld induziert;
   einem zweiten Magnetisierungsmodul (200) mit einer zweiten Spule (210) mit einem ersten Spulenende (211), das mit dem ersten Anschluss (11) elektrisch verbunden ist, und einem zweiten Spulenende (212), das mit dem zweiten Anschluss (12) elektrisch verbunden ist, so dass beim Anliegen des Spannungssignals ($U_c$) ein zweiter elektrischer Strom ($i_2$) durch die zweite Spule (210) ein zweites Magnetfeld induziert; und
   einem magnetischen Vormagnetisierungsmodul (300), welches ein drittes Magnetfeld erzeugt,
   wobei das erste Magnetisierungsmodul (100), das zweite Magnetisierungsmodul (200) und das Vormagnetisierungsmodul (300) derart angeordnet sind, dass durch eine Steuerung des Spannungssignals ($U_c$) der in das Magnetlager eingeführte Körper (105) durch ein Gleichgewicht magnetischer Kräfte in einem kontaktlosen Zustand zwischen dem ersten Magnetisierungsmodul (100), dem zweiten Magnetisierungsmodul (200) und dem Vormagnetisierungsmodul (300) schwebt, und
   wobei das Magnetlager zur Erfassung einer Positionsabweichung des Körpers (105) bezüglich einer Referenzposition Mittel (600) umfasst, um die Differenz zwischen der zeitlichen Änderung des ersten Stroms ($i_1$) und der zeitlichen Änderung des zweiten Stroms ($i_2$) oder die zeitliche Änderung der Differenz zwischen dem ersten Storm ($i_1$) und dem zweiten Strom ($i_2$) zu erfassen.

2. Magnetlager nach Anspruch 1, welches weiter einen ersten Stromsensor (410) umfasst, der ausgebildet ist, einen Sensorstrom ($i_s$) basierend auf einer Differenz des ersten Stroms ($i_1$) und des zweiten Stroms ($i_2$) zu erfassen, und/oder einen zweiten Stromsensor (420) umfasst, der ausgebildet ist, einen Steuerstrom ($i_c$) basierend auf einer Summe des ersten Stroms ($i_1$) und des zweiten Stroms ($i_2$) zu erfassen, und/oder
   welches weiter einen Transformator (600) und einen ersten und zweiten Sensoranschluss (611, 622) umfasst, wobei der Transformator (600) eine erste Primärspule (601), eine zweite Primärspule (602) und eine Sekundärspule (603) aufweist, die über einen gemeinsamen Spulenkern (604) magnetisch miteinander gekoppelt sind,
   wobei die erste Spule (601) entlang eines Strompfades des ersten Stroms ($i_1$) angeordnet ist, und die zweite Spule (602) entlang eines Strompfades des zweiten Stroms ($i_2$) angeordnet ist, und die Sekundärspule (603) zwischen dem ersten Sensoranschluss (611) und dem zweiten Sensoranschluss (612) elektrisch geschaltet ist, und/oder
   wobei das Vormagnetisierungsmodul (300) ausgebildet ist, um eine erste und eine zweite magnetische Flusskomponente zu erzeugen, wobei die erste Flusskomponente eine gleiche Richtung aufweist, wie ein durch die erste Spule (110) erzeugter Magnetfluss, und die zweite Flusskomponente eine entgegengesetzte Richtung aufweist, wie ein durch die zweite Spule (210) erzeugter Magnetfluss, wenn der erste Strom ($i_1$) durch die erste Spule (110) und der zweite Strom ($i_2$) durch die zweite Spule (210) fließt, und/oder

wobei das Vormagnetisierungsmodul (300) einen ersten Permanentmagneten (310) und zweiten Permanentmagneten (320) aufweist, wobei der erste Permanentmagnet (310) magnetisch an die erste Spule (110) des ersten Magnetisierungsmoduls (100) gekoppelt ist und der zweite Permanentmagnet (320) magnetisch an die zweite Spule (200) des zweiten Magnetisierungsmoduls gekoppelt ist.

3. Magnetlager nach einem der Ansprüche 1 oder 2, wobei das Vormagnetisierungsmoduls (300) zumindest eine Spule (330, 340) umfasst, die durch einen Vormagnetisierungsstrom ($i_b$) anregbar ist, um so ein steuerbares drittes Magnetfeld durch den Vormagnetisierungsstrom ($i_b$) zu erzeugen,

wobei, bevorzugt, die zumindest eine Spule (330, 340) eine dritte Spule (330) und eine vierte Spule (340) umfasst, die elektrisch in Reihe geschaltet und durch eine Bias-Spannung ($U_b$) anregbar sind, und das Magnetlager weiter einen ersten Spulenkern (115) und einen zweiten Spulenkern (215) umfasst, wobei die erste Spule (110) und die dritte Spule (330) um den ersten Spulenkern (115) gewickelt sind, und die zweite Spule (210) und die vierte Spule (340) um den zweiten Spulenkern (215) gewickelt sind.

4. Magnetlager nach Anspruch 3, welches weiter ein Steuermodul (400) umfasst, das ausgebildet ist, um das Spannungssignal ($U_c$) zu steuern, und/oder um die Bias-Spannung ($U_b$) zu ändern, um so das dritte Magnetfeld des Vormagnetisierungsmoduls (300) zu ändern,

wobei, bevorzugt, das Steuermodul (400) weiter ausgebildet ist, um ein erstes pulsbreiten-moduliertes (PWM-) Signal als Spannungssignal ($U_c$) mit einem positiven Puls und einem negativen Puls bereitzustellen und um eine Pulsbreite des positiven Pulses und/oder des negativen Pulses zu ändern, um so das erste Magnetfeld und das zweite Magnetfeld zu ändern,

und/oder um ein zweites pulsbreiten-moduliertes (PWM-) Signal als Bias-Spannungssignal ($U_b$) mit einem positiven Puls und einem negativen Puls bereitzustellen und um eine Pulsbreite des positiven Pulses und/oder des negativen Pulses zu ändern, um so das dritte Magnetfeld zu ändern.

5. Magnetlager nach Anspruch 4, soweit rückbezogen auf Anspruch 2, wobei das Steuermodul (400) weiter ausgebildet ist, um während einer Sensorperiode (Ts) den Sensorstrom ($i_s$) zu erfassen und zumindest für einen Abschnitt der Sensorperiode (Ts) ein Spannungsniveau ($U_{dc}$) des zweiten PWM-Signals ($U_b$) konstant zu halten oder gleich einem Spannungsniveau ($U_{dc}$) des ersten PWM-Signals ($U_c$) zu halten.

6. Magnetlager nach Anspruch 4 oder Anspruch 5, wobei das Steuermodul (400) weiter ausgebildet ist, um das erste PWM-Signal ($U_c$) während der Sensorperiode (Ts) mit gleichen Pulsbreiten für die positiven und negativen Pulse bereitzustellen und während einer Steuerperiode (Tc) die Pulsbreiten für die positiven und negativen Pulse verschieden zu wählen, um so das erste und zweite Magnetfeld zu ändern,

wobei, bevorzugt, das Steuermodul (400) weiter ausgebildet ist, um während der Sensorperiode (Ts) den Sensorstrom ($i_s$) mehrfach zu erfassen und, basierend darauf, eine zeitliche Änderung des Sensorstroms ($di_s$) zu ermitteln,

wobei, ferner bevorzugt, das Steuermodul (400) weiter ausgebildet ist, um basierend auf der ermittelten zeitlichen Änderung des Sensorstroms ($di_s$) eine Abweichung ($\hat{x}$) einer Position des Körpers (105) entlang der zumindest einen Richtung (R) festzustellen und, basierend darauf, den Steuerstrom ($i_c$) in der Steuerperiode (Tc) zu ändern, um eine Positionskorrektur des Körper (105) zu veranlassen.

7. Magnetlager nach einem der vorhergehenden Ansprüche, wobei das erste Magnetisierungsmodul (100) im Gleichgewicht eine gleiche Induktivität wie das zweite Magnetisierungsmodul (200) aufweist.

8. Magnetische Halterung mit mehreren Magnetlagern nach einem der Ansprüche 1 bis 7, wobei die mehreren Magnetlager entlang einer Ebene oder um eine Achse herum angeordnet sind, so dass der Körper kontaktlos innerhalb der Ebene verschiebbar ist oder um eine Drehachse kontaktlos drehbar ist.

9. Verfahren zum kontaktlosen Halten eines Körpers (105) zwischen einem ersten Magnetisierungsmodul (100) mit einer ersten Spule (110), einem zweiten Magnetisierungsmodul (200) mit einer zweiten Spule (210) und einem Vormagnetisierungsmodul (300), das eine Vormagnetisierung bereitstellt, wobei die erste Spule (110) und die zweite Spule (210) parallel mit einem ersten und zweiten Anschluss (11, 12) verbunden sind, mit folgenden Schritten:

Anregen (S110) der ersten Spule (110) und der zweiten Spule (210) mit einem Spannungssignal ($U_c$) an dem ersten und zweiten Anschluss (11, 12), um durch einen ersten Strom ($i_1$) in der ersten Spule (110) ein erstes Magnetfeld zu erzeugen und durch einen zweiten Strom ($i_2$) in der zweiten Spule (210) ein zweites Magnetfeld zu erzeugen;

Erfassen (S120) einer Differenz zwischen der zeitlichen Änderung des ersten Stroms ($i_1$) und der zeitlichen Änderung des zweiten Stroms ($i_2$) oder der zeitlichen Änderung der Differenz zwischen dem ersten Strom ($i_1$) und dem zweiten Strom ($i_2$) und Ermitteln einer Positionsabweichung ($\hat{x}$) des Körpers (105) bezüglich einer Referenzposition basierend auf der Differenz; und

Ändern (S130) des Spannungssignal ($U_c$) basierend auf der ermittelten Positionsabweichung ($\hat{x}$), sodass der Körper (105) durch ein Gleichgewicht des ersten Magnetfeldes, des zweiten Magnetfeldes und der Vormagnetisierung in einem kontaktlosen Zustand zwischen dem ersten Magnetisierungsmodul (100), dem zweiten Magnetisierungsmodul (200) und dem Vormagnetisierungsmodul (300) schwebend gehalten wird.

10. Verfahren nach Anspruch 9, wobei die zeitlichen Änderungen des ersten Stroms ($i_1$) und des zweiten Stroms ($i_2$) mit einer Mehrfachabtastung einer Kombination des ersten Stroms ($i_1$) und des zweiten Stroms ($i_2$) oder mit einem Transformator (600), der durch eine Kombination des ersten Stroms ($i_1$) und des zweiten Stroms ($i_2$) auf seiner Primärseite angeregt wird, erfasst werden, und/oder
wobei das Verfahren weiter ein Erfassen eines Summenstromes aus dem erste Strom ($i_1$) und dem zweiten Strom ($i_2$) umfasst, und die Änderung des Spannungssignal ($U_c$) ferner basierend auf dem erfassten Summenstrom durchgeführt wird.

11. Computerprogrammprodukt mit einem darauf gespeicherten Computerprogramm, welches ausgebildet ist, um ein Verfahren nach einem der Ansprüche 9 oder 10 auszuführen, wenn es auf einem Prozessor läuft.

12. Vorrichtung zur Ermittlung einer Positionsabweichung eines, insbesondere rotierenden, Körpers (105) in einem Magnetlager nach einem der Ansprüche 1 bis 7 in Bezug auf eine Referenzposition, insbesondere Mittenposition, des Körpers (105) zwischen
einem ersten Magnetisierungsmodul (100) mit wenigstens einer ersten Spule (110), die mit einem ersten Spannungssignal ($U_{ext}$, $U_c$) beaufschlagbar ist, so dass ein erster elektrischer Strom ($i_1$) durch die erste Spule (110) bewirkt und ein erstes Magnetfeld induziert wird, und
einem zweiten Magnetisierungsmodul (200) mit wenigstens einer zweiten Spule (210), die parallel zur ersten Spule (110) mit dem ersten Spannungssignal ($U_{ext}$, $U_c$) beaufschlagbar ist, so dass ein zweiter elektrischer Strom ($i_2$) durch die zweite Spule (210) bewirkt und ein zweites Magnetfeld induziert wird,
wobei die Vorrichtung dazu ausgebildet ist, zur Detektion einer Positionsabweichung des Körpers (105) bzgl. der Referenzposition die Differenz zwischen der zeitlichen Änderung des ersten Stroms ($i_1$) und der zeitlichen Änderung des zweiten Stroms ($i_2$) oder die zeitliche Änderung der Differenz zwischen dem ersten Strom ($i_1$) und dem zweiten Strom ($i_2$) zu erfassen.

13. Vorrichtung nach Anspruch 12, wobei die Vorrichtung einen Verstärker zur Verstärkung der Differenz zwischen dem ersten Strom ($i_1$) und dem zweiten Strom ($i_2$) oder der zeitlichen Änderung der Differenz zwischen dem ersten Strom ($i_1$) und dem zweiten Strom ($i_2$) umfasst, und/oder wobei die Vorrichtung einen Transformator (600) mit einer ersten Primärspule (601), einer zweiten Primärspule (602) und einer Sekundärspule (603) aufweist, wobei der erste Strom ($i_1$) durch die erste Primärspule (601) und der zweite Strom ($i_2$) durch die zweite Primärspule (602) derart strömt, dass in der Sekundärspule (603) ein Spannungssignal ($u_{sen}$, $u_{tr}$) induziert wird, das von der Differenz der zeitlichen Änderungen des ersten und zweiten Stroms ($i_1$, $i_2$) abhängig ist,
wobei, bevorzugt, die Vorrichtung dazu ausgebildet ist, die Positionsabweichung, insbesondere deren Betrag, in Abhängigkeit von der Amplitude des induzierten Spannungssignals ($u_{sen}$, $u_{tr}$) zu bestimmen, und/oder
wobei, bevorzugt, die Vorrichtung dazu ausgebildet ist, die Phasenlage des induzierten Spannungssignals ($u_{sen}$, $u_{tr}$) in Bezug auf das erste Spannungssignal ($U_{ext}$, $U_c$) zu bestimmen und die Richtung der Positionsabweichung anhand der Phasenlage zu ermitteln, und/oder
wobei, bevorzugt, ein Verstärker, insbesondere mit einer hohen effektiven Eingangsimpedanz, zur Verstärkung des induzierten Spannungssignals ($u_{sen}$, $u_{tr}$) vorgesehen ist, und/oder der Teilstromkreis der Sekundärspule (603) derart ausgelegt ist, dass in diesem nur ein geringer Strom fließt.

14. Vorrichtung nach zumindest einem der Ansprüche 12 oder 13,
wobei es sich bei der ersten Spule (110) und der zweiten Spule (210) um Luftspulen ohne Eisenkern handelt oder
wobei ein Eisenkern für die erste Spule (110) und/oder die zweite Spule (210) vorgesehen ist, und/oder
wobei der Körper (105) in einem kontaktlosen Zustand zwischen dem ersten Magnetisierungsmodul (100) und dem zweiten Magnetisierungsmodul (200) bei einem Gleichgewicht der, insbesondere vom ersten und zweiten Magnetfeld bewirkten, magnetischen Kräfte in der Referenzposition schwebt.

**15.** Magnetlager mit einer Vorrichtung nach zumindest einem der Ansprüche 12 bis 14, bei dem es sich insbesondere um ein Magnetlager einer Vakuumpumpe, insbesondere Turbomolekularpumpe, handelt
oder
Vakuumpumpe, insbesondere Turbomolekularpumpe, mit einem Magnetlager
nach zumindest einem der Ansprüche 1 bis 7 und/oder mit einer Vorrichtung nach zumindest einem der Ansprüche 12 bis 14, wobei es sich bei dem Körper (105) vorzugsweise um eine Rotorwelle der Vakuumpumpe handelt.

**Claims**

**1.** A magnetic bearing for the contactless holding of a body (105) in at least one direction (R) by means of a magnetic field, comprising the following features:

a first terminal (11) and a second terminal (12) between which a voltage signal ($U_c$) can be applied;
a first magnetization module (100) having a first coil (110) with a first coil end (111) which is electrically connected to the first terminal (11) and with a second coil end (112) which is electrically connected to the second terminal (12) so that, if the voltage signal (Uc) is applied, a first electric current ($i_1$) through the first coil (110) induces a first magnetic field;
a second magnetization module (200) having a second coil (210) with a first coil end (211) which is electrically connected to the first terminal (11) and with a second coil end (212) which is electrically connected to the second terminal (12) so that, if the voltage signal (Uc) is applied, a second electric current ($i_2$) through the second coil (210) induces a second magnetic field; and
a magnetic pre-magnetization module (300) which generates a third magnetic field,
wherein the first magnetization module (100), the second magnetization module (200) and the pre-magnetization module (300) are arranged such that, due to a control of the voltage signal ($U_c$), the body (105) introduced into the magnetic bearing floats in a contactless state between the first magnetization module (100), the second magnetization module (200) and the pre-magnetization module (300) due to an equilibrium of magnetic forces; and
wherein, in order to detect a positional deviation of the body (105) with respect to a reference position, the magnetic bearing comprises means (600) to detect the difference between the time rate of change of the first current ($i_1$) and the time rate of change of the second current ($i_2$) or to detect the time rate of change of the difference between the first current ($i_1$) and the second current ($i_2$).

**2.** A magnetic bearing in accordance with claim 1 which further comprises a first current sensor (410) configured to detect a sensor current ($i_s$) based on a difference of the first current ($i_1$) and the second current ($i_2$); and/or which comprises a second current sensor (420) configured to detect a control current ($i_c$) based on a sum of the first current ($i_1$) and the second current ($i_2$); and/or
which further comprises a transformer (600) and a first and second sensor terminal (611, 622), with the transformer (600) having a first primary coil (601), a second primary coil (602) and a secondary coil (603) which are magnetically coupled to one another via a common coil core (604),
wherein the first coil (601) is arranged along a current path of the first current ($i_1$) and the second coil (602) is arranged along a current path of the second current ($i_2$) and the secondary coil (603) is electrically connected between the first sensor terminal (611) and the second sensor terminal (612); and/or
wherein the pre-magnetization module (300) is configured to generate a first and second magnetic flux component, with the first flux component having the same direction as a magnetic flux generated by the first coil (110) and the second flux component having the opposite direction to a magnetic flux generated by the second coil (210) when the first current ($i_1$) flows through the first coil (110) and the second current ($i_2$) flows through the second coil (210); and/or
wherein the pre-magnetization module (300) has a first permanent magnet (310) and a second permanent magnet (320), with the first permanent magnet (310) being magnetically coupled to the first coil (110) of the first magnetization module (100) and the second permanent magnet (320) being magnetically coupled to the second coil (200) of the second magnetization module.

**3.** A magnetic bearing in accordance with one of the claims 1 or 2, wherein the pre-magnetization module (300) comprises at least one coil (330, 340) which can be excited by a pre-magnetization current ($i_b$) to thereby generate a controllable third magnetic field through the pre-magnetization current ($i_b$),
wherein, preferably, the at least one coil (330, 340) comprises a third coil (330) and a fourth coil (340) which are electrically connected in series and which can be excited by a bias voltage ($U_b$) and the magnetic bearing further comprises a first coil core (115) and a second coil core (215), with the first coil (110) and the third coil (330) being wound around the first coil core (115) and the second coil (210) and the fourth coil (340) being wound around the second coil core (215).

4. A magnetic bearing in accordance with claim 3 which further comprises a control module (400) which is configured to control the voltage signal ($U_c$) and/or to change the bias voltage ($U_b$) to thereby change the third magnetic field of the pre-magnetization module (300),

wherein, preferably, the control module (400) is further configured to provide a first pulse width modulated (PWM) signal as a voltage signal ($U_c$) having a positive pulse and a negative pulse and to change a pulse width of the positive pulse and/or of the negative pulse to thereby change the first magnetic field and the second magnetic field and/or is configured to provide a second pulse width modulated (PWM) signal as a bias voltage signal ($U_b$) having a positive pulse and a negative pulse and to change a pulse width of the positive pulse and/or of the negative pulse to thereby change the third magnetic field.

5. A magnetic bearing in accordance with claim 4, where dependent on claim 2, wherein the control module (400) is further configured to detect the sensor current ($i_s$) during a sensor period (Ts) and to keep a voltage level ($U_{dc}$) of the second PWM signal ($U_b$) constant or equal to a voltage level ($U_{dc}$) of the first PWM signal ($U_c$) for at least a portion of the sensor period (Ts).

6. A magnetic bearing in accordance with claim 4 or claim 5, wherein the control module (400) is further configured to provide the first PWM signal ($U_c$) with equal pulse widths for the positive and negative pulses during the sensor period (Ts) and to select the pulse widths differently for the positive and negative pulses during a control period (Tc) to thereby change the first and second magnetic fields,

wherein, preferably, the control module (400) is further configured to detect the sensor current ($i_s$) multiple times during the sensor period (Ts) and, based thereon, to determine a time rate of change of the sensor current (dis), wherein, further preferably, the control module (400) is further configured to determine a deviation ($\hat{x}$) of a position of the body (105) along the at least one direction (R) based on the determined time rate of change of the sensor current ($di_s$) and, based thereon, to change the control current ($i_c$) in the control period (Tc) in order to initiate a positional correction of the body (105).

7. A magnetic bearing in accordance with any one of the preceding claims, wherein the first magnetization module (100) has the same inductance as the second magnetization module (200) in equilibrium.

8. A magnetic holder comprising a plurality of magnetic bearings in accordance with any one of the claims 1 to 7, wherein the plurality of magnetic bearings are arranged along a plane or about an axis such that the body is contactlessly displaceable within the plane or is contactlessly rotatable about an axis of rotation.

9. A method for the contactless holding of a body (105) between a first magnetization module (100) having a first coil (110), a second magnetization module (200) having a second coil (210) and a pre-magnetization module (300) which provides a pre-magnetization, wherein the first coil (110) and the second coil (210) are connected in parallel with a first and second terminal (11, 12), comprising the following steps:

exciting (S110) the first coil (110) and the second coil (210) using a voltage signal ($U_c$) at the first and second terminals (11, 12) to generate a first magnetic field through a first current ($i_1$) in the first coil (110) and a second magnetic field through a second current ($i_2$) in the second coil (210);
detecting (S120) a difference between the time rate of change of the first current ($i_1$) and the time rate of change of the second current ($i_2$) or detecting the time rate of change of the difference between the first current ($i_1$) and the second current ($i_2$) and determining a positional deviation ($\hat{x}$) of the body (105) with respect to a reference position based on the difference; and
changing (S130) the voltage signal ($U_c$) based on the determined positional deviation ($\hat{x}$) such that the body (105) is held in a floating manner in a contactless state between the first magnetization module (100), the second magnetization module (200) and the pre-magnetization module (300) by an equilibrium of the first magnetic field, of the second magnetic field and of the pre-magnetization.

10. A method in accordance with claim 9, wherein the time rates of change of the first current ($i_1$) and of the second current ($i_2$) are detected by a multiple sampling of a combination of the first current ($i_1$) and the second current ($i_2$) or by a transformer (600) which is excited at its primary side by a combination of the first current ($i_1$) and the second current ($i_2$); and/or

wherein the method further comprises a detection of a sum current of the first current ($i_1$) and the second current ($i_2$) and the change of the voltage signal ($U_c$) is further carried out based on the detected sum current.

11. A computer program product comprising a computer program which is stored thereon and which is configured to carry out a method in accordance with one of the claims 9 or 10 when executed on a processor.

12. An apparatus for determining a positional deviation of a body, in particular a rotating body (105), in a magnetic bearing in accordance with any one of the claims 1 to 7 with respect to a reference position, in particular a center position, of the body (105) between

a first magnetization module (100) having at least one first coil (110) which can be acted on by a first voltage signal ($U_{ext}$, $U_c$) such that a first electric current ($i_1$) through the first coil (110) is effected and a first magnetic field is induced and
a second magnetization module (200) having at least one second coil (210) which can be acted on by the first voltage signal ($U_{ext}$, $U_c$) in parallel with the first coil (110) such that a second electric current ($i_2$) through the second coil (210) is effected and a second magnetic field is induced,
wherein, in order to detect a positional deviation of the body (105) with respect to the reference position, the apparatus is configured to detect the difference between the time rate of change of the first current ($i_1$) and the time rate of change of the second current ($i_2$) or to detect the time rate of change of the difference between the first current ($i_1$) and the second current ($i_2$).

13. An apparatus in accordance with claim 12, wherein the apparatus comprises an amplifier for amplifying the difference between the first current ($i_1$) and the second current ($i_2$) or the time rate of change of the difference between the first current ($i_1$) and the second current ($i_2$); and/or
wherein the apparatus has a transformer (600) having a first primary coil (601), a second primary coil (602) and a secondary coil (603), with the first current ($i_1$) flowing through the first primary coil (601) and the second current ($i_2$) flowing through the second primary coil (602) such that a voltage signal ($u_{sen}$, $u_{tr}$) is induced in the secondary coil (603) which is dependent on the difference of the time rates of change of the first and second currents ($i_1$, $i_2$);
wherein, preferably, the apparatus is configured to determine the positional deviation, in particular its amount, in dependence on the amplitude of the induced voltage signal ($u_{sen}$, $u_{tr}$); and/or
wherein, preferably, the apparatus is configured to determine the phasing of the induced voltage signal ($u_{sen}$, $u_{tr}$) with respect to the first voltage signal ($U_{ext}$, $U_c$) and to determine the direction of the positional deviation using the phasing; and/or
wherein, preferably, an amplifier, in particular having a high effective input impedance, is provided for amplifying the induced voltage signal ($u_{sen}$, $u_{tr}$) and/or the part circuit of the secondary coil (603) is adapted such that only a small current flows in it.

14. An apparatus in accordance with at least one of the claims 12 or 13,
wherein the first coil (110) and the second coil (210) are air-core coils without an iron core or wherein an iron core is provided for the first coil (110) and/or for the second coil (210); and/or
wherein the body (105) floats in the reference position in a contactless state between the first magnetization module (100) and the second magnetization module (200) on an equilibrium of the magnetic forces which are in particular effected by the first and second magnetic fields.

15. A magnetic bearing having an apparatus in accordance with at least one of the claims 12 to 14 which is in particular a magnetic bearing of a vacuum pump, in particular of a turbomolecular pump,
or
a vacuum pump, in particular a turbomolecular pump, having a magnetic bearing in accordance with at least one of the claims 1 to 7 and/or having an apparatus in accordance with at least one of the claims 12 to 14, with the body (105) preferably being a rotor shaft of the vacuum pump.

**Revendications**

1. Palier magnétique pour le maintien sans contact d'un corps (105) dans au moins une direction (R) au moyen d'un champ magnétique, comportant les éléments suivants :

une première borne (11) et une seconde borne (12) entre lesquelles peut être appliqué un signal de tension ($U_c$) ;

un premier module de magnétisation (100) pourvu d'une première bobine (110) ayant une première extrémité de bobine (111) connectée électriquement à la première borne (11), et une seconde extrémité de bobine (112) connectée électriquement à la seconde borne (12), de sorte que lors de l'application du signal de tension ($U_c$) un premier courant électrique ($i_1$) induit un premier champ magnétique à travers la première bobine (110) ;

un second module de magnétisation (200) pourvu d'une seconde bobine (210) ayant une première extrémité de bobine (211) connectée électriquement à la première borne (11), et une seconde extrémité de bobine (212) connectée électriquement à la seconde borne (12), de sorte que lors de l'application du signal de tension ($U_c$) un second courant électrique ($i_2$) induit un second champ magnétique à travers la seconde bobine (210) ; et

un module magnétique de prémagnétisation (300) qui génère un troisième champ magnétique,

dans lequel

le premier module de magnétisation (100), le second module de magnétisation (200) et le module de prémagnétisation (300) sont agencés de telle sorte que par une commande du signal de tension ($U_c$), le corps (105) introduit dans le palier magnétique est en suspension dans un état sans contact entre le premier module de magnétisation (100), le second module de magnétisation (200) et le module de prémagnétisation (300), grâce à un équilibre des forces magnétiques, et

pour détecter un écart de positionnement du corps (105) par rapport à une position de référence, le palier magnétique comprend des moyens (600) pour détecter la différence entre la modification temporelle du premier courant ($i_1$) et la modification temporelle du second courant ($i_2$) ou la modification temporelle de la différence entre le premier courant ($i_1$) et le second courant ($i_2$).

2. Palier magnétique selon la revendication 1,

comportant en outre un premier capteur de courant (410) qui est réalisé pour détecter un courant de capteur ($i_s$) en se basant sur une différence du premier courant ($i_1$) et du second courant ($i_2$), et/ou un second capteur de courant (420) qui est réalisé pour détecter un courant de commande ($i_c$) en se basant sur une somme du premier courant ($i_1$) et du second courant ($i_2$), et/ou

comportant en outre un transformateur (600) et une première et une seconde borne de capteur (611, 622), le transformateur (600) présentant une première bobine primaire (601), une seconde bobine primaire (602) et une bobine secondaire (603) qui sont couplées magnétiquement les unes aux autres par un noyau de bobine commun (604),

dans lequel

la première bobine (601) est agencée le long d'un trajet du premier courant ($i_1$) et la seconde bobine (602) est agencée le long d'un trajet du second courant ($i_2$), et la bobine secondaire (603) est branchée électriquement entre la première borne de capteur (611) et la seconde borne de capteur (612), et/ou

le module de prémagnétisation (300) est réalisé pour générer une première et une seconde composante de flux magnétique, la première composante de flux ayant la même direction qu'un flux magnétique généré à travers la première bobine (110), et la seconde composante de flux ayant une direction opposée à celle d'un flux magnétique généré à travers la seconde bobine (210), lorsque le premier courant ($i_1$) circule à travers la première bobine (110) et que le second courant ($i_2$) circule à travers la seconde bobine (210), et/ou

le module de prémagnétisation (300) présente un premier aimant permanent (310) et un second aimant permanent (320), le premier aimant permanent (310) étant couplé magnétiquement à la première bobine (110) du premier module de magnétisation (100) et le second aimant permanent (320) étant couplé magnétiquement à la seconde bobine (200) du second module de magnétisation.

3. Palier magnétique selon l'une des revendications 1 ou 2,

dans lequel

le module de prémagnétisation (300) comprend au moins une bobine (330, 340) excitable par un courant de prémagnétisation ($i_b$) pour générer ainsi un troisième champ magnétique à commander, grâce au courant de prémagnétisation ($i_b$),

de préférence, ladite au moins une bobine (330, 340) comprend une troisième bobine (330) et une quatrième bobine (340) qui sont branchées électriquement en série et excitables par une tension de polarisation ($U_b$), et le palier magnétique comprend en outre un premier noyau de bobine (115) et un second noyau de bobine (215), la première bobine (110) et la troisième bobine (330) étant enroulées autour du premier noyau de bobine (115), et la seconde bobine (210) et la quatrième bobine (340) étant enroulées autour du second noyau de bobine (215).

4. Palier magnétique selon la revendication 3,

comportant en outre un module de commande (400) qui est réalisé pour commander le signal de tension ($U_c$) et/ou pour modifier la tension de polarisation ($U_b$), afin de modifier ainsi le troisième champ magnétique du module de prémagnétisation (300),

de préférence, le module de commande (400) est en outre réalisé pour fournir un premier signal modulé en largeur d'impulsion (PWM) à titre de signal de tension ($U_c$) ayant une impulsion positive et une impulsion négative, et pour modifier une largeur de l'impulsion positive et/ou de l'impulsion négative, afin de modifier ainsi le premier champ magnétique et le second champ magnétique,

et/ou

pour fournir un second signal modulé en largeur d'impulsion (PWM) à titre de signal de tension de polarisation ($U_b$) ayant une impulsion positive et une impulsion négative, et pour modifier une largeur de l'impulsion positive et/ou de l'impulsion négative, afin de modifier ainsi le troisième champ magnétique.

**5.** Palier magnétique selon la revendication 4 prise en dépendance de la revendication 2,
dans lequel
le module de commande (400) est en outre réalisé pour détecter le courant de capteur ($i_s$) pendant une période de capteur (Ts) et pour maintenir constant un niveau de tension ($U_{dc}$) du second signal PWM ($U_b$) au moins pendant une partie de la période de capteur (Ts), ou pour le maintenir égal à un niveau de tension ($U_{dc}$) du premier signal PWM ($U_c$).

**6.** Palier magnétique selon la revendication 4 ou la revendication 5,
dans lequel
le module de commande (400) est en outre réalisé pour fournir le premier signal PWM ($U_c$) avec des largeurs d'impulsion égales pour les impulsions positives et négatives pendant la période de capteur (Ts), et pour choisir différemment les largeurs d'impulsion pour les impulsions positives et négatives pendant une période de commande (Tc), afin de modifier ainsi le premier et le second champ magnétique,
de préférence, le module de commande (400) est en outre réalisé pour détecter plusieurs fois le courant de capteur ($i_s$) pendant la période de capteur (Ts) et pour déterminer, à la base de celui-ci, une modification temporelle du courant de capteur ($di_s$),
de préférence, le module de commande (400) est en outre réalisé pour constater un écart ($\hat{x}$) d'une position du corps (105) le long de ladite au moins une direction (R) en se basant sur la modification temporelle déterminée du courant de capteur ($di_s$), et pour modifier, en se basant sur celui-ci, le courant de commande ($i_c$) dans la période de commande (Tc), afin d'inciter une correction de positionnement du corps (105).

**7.** Palier magnétique selon l'une des revendications précédentes,
dans lequel
en équilibre, le premier module de magnétisation (100) présente la même inductivité que le second module de magnétisation (200).

**8.** Monture magnétique comportant plusieurs paliers magnétiques selon l'une des revendications 1 à 7,
dans laquelle
lesdits plusieurs paliers magnétiques sont agencés le long d'un plan ou autour d'un axe, de sorte que le corps est mobile en translation sans contact à l'intérieur du plan ou est mobile en rotation sans contact autour d'un axe de rotation.

**9.** Procédé pour le maintien sans contact d'un corps (105) entre un premier module de magnétisation (100) pourvu d'une première bobine (110), un second module de magnétisation (200) pourvu d'une seconde bobine (210), et un module de prémagnétisation (300) qui assure une prémagnétisation, la première bobine (110) et la seconde bobine (210) étant connectées en parallèle à une première et à une seconde borne (11, 12), comprenant les étapes suivantes consistant à :

exciter (S110) la première bobine (110) et la seconde bobine (210) par un signal de tension ($U_c$) à la première et à la seconde borne (11, 12), afin de générer un premier champ magnétique par un premier courant ($i_1$) dans la première bobine (110) et de générer un second champ magnétique par un second courant ($i_2$) dans la seconde bobine (210) ;
détecter (S120) une différence entre la modification temporelle du premier courant ($i_1$) et la modification temporelle du second courant ($i_2$) ou la modification temporelle de la différence entre le premier courant ($i_1$) et le second courant ($i_2$), et déterminer un écart de positionnement ($\hat{x}$) du corps (105) par rapport à une position de référence en se basant sur la différence ; et
modifier (S130) le signal de tension ($U_c$) en se basant sur l'écart de positionnement ($\hat{x}$) déterminé, de sorte que le corps (105) est maintenu en suspension dans un état sans contact entre le premier module de magnétisation (100), le second module de magnétisation (200) et le module de prémagnétisation (300), grâce à un équilibre du premier champ magnétique, du second champ magnétique et de la prémagnétisation.

10. Procédé selon la revendication 9,
dans lequel
les modifications temporelles du premier courant ($i_1$) et du second courant ($i_2$) sont détectées par un échantillonnage multiple d'une combinaison du premier courant ($i_1$) et du second courant ($i_2$) ou par un transformateur (600) qui est excité sur son côté primaire par une combinaison du premier courant ($i_1$) et du second courant ($i_2$), et/ou le procédé comprend en outre une détection d'un courant cumulé du premier courant ($i_1$) et du second courant ($i_2$), et la modification du signal de tension ($U_c$) s'effectue en outre en se basant sur le courant cumulé détecté.

11. Produit de programme informatique comportant un programme informatique mémorisé sur celui-ci, qui est réalisé pour mettre en oeuvre un procédé selon l'une des revendications 9 ou 10 lorsqu'il est exécuté sur un processeur.

12. Dispositif pour déterminer un écart de positionnement d'un corps (105), en particulier en rotation, dans un palier magnétique selon l'une des revendications 1 à 7, par rapport à une position de référence, en particulier une position centrale, du corps (105) entre
un premier module de magnétisation (100) pourvu d'au moins une première bobine (110) susceptible d'être sollicitée par un premier signal de tension ($U_{ext}$, $U_c$), de sorte qu'un premier courant électrique ($i_1$) est engendré par la première bobine (110) et qu'un premier champ magnétique est induit, et
un second module de magnétisation (200) pourvu d'au moins une seconde bobine (210) susceptible d'être sollicitée par le premier signal de tension ($U_{ext}$, $U_c$) en parallèle à la première bobine (110), de sorte qu'un second courant électrique ($i_2$) est engendré par la seconde bobine (210) et qu'un second champ magnétique est induit, et
en vue de détecter un écart de positionnement du corps (105) par rapport à la position de référence, le dispositif est réalisé pour détecter la différence entre la modification temporelle du premier courant ($i_1$) et la modification temporelle du second courant ($i_2$) ou la modification temporelle de la différence entre le premier courant ($i_1$) et le second courant ($i_2$).

13. Dispositif selon la revendication 12,
dans lequel
le dispositif comprend un amplificateur pour amplifier la différence entre le premier courant ($i_1$) et le second courant ($i_2$) ou la modification temporelle de la différence entre le premier courant ($i_1$) et le second courant ($i_2$), et/ou le dispositif comprend un transformateur (600) présentant une première bobine primaire (601), une seconde bobine primaire (602) et une bobine secondaire (603), le premier courant ($i_1$) circulant à travers la première bobine primaire (601) et le second courant ($i_2$) circulant à travers la seconde bobine primaire (602) de telle sorte qu'un signal de tension ($u_{sen}$, $u_{tr}$) est induit dans la bobine secondaire (603), qui dépend de la différence des modifications temporelles du premier et du second courant ($i_1$, $i_2$), et
de préférence, le dispositif est réalisé pour définir l'écart de positionnement, en particulier son montant, en fonction de l'amplitude du signal de tension induit ($u_{sen}$, $U_{tr}$), et/ou
de préférence, le dispositif est réalisé pour définir la position de phase du signal de tension induit ($u_{sen}$, $u_{tr}$) par rapport au premier signal de tension ($U_{ext}$, $U_c$) et pour déterminer la direction de l'écart de positionnement en se basant sur la position de phase, et/ou
de préférence, il est prévu un amplificateur, ayant en particulier une impédance d'entrée effective élevée, pour amplifier le signal de tension induit ($u_{sen}$, $u_{tr}$), et/ou le circuit électrique partiel de la bobine secondaire (603) est conçu de telle sorte qu'un courant seulement faible circule dans celui-ci.

14. Dispositif selon l'une au moins des revendications 12 ou 13,
dans lequel
la première bobine (110) et la seconde bobine (210) sont des bobines à air sans noyau de fer, ou il est prévu un noyau de fer pour la première bobine (110) et/ou pour la seconde bobine (210), et/ou le corps (105) est en suspension dans la position de référence dans un état sans contact entre le premier module de magnétisation (100) et le second module de magnétisation (200) lors d'un équilibre des forces magnétiques engendrées en particulier par le premier et par le second champ magnétique.

15. Palier magnétique comportant un dispositif selon l'une au moins des revendications 12 à 14, qui est en particulier un palier magnétique d'une pompe à vide, en particulier d'une pompe turbomoléculaire, ou
Pompe à vide, en particulier pompe turbomoléculaire, comportant un palier magnétique selon l'une au moins des revendications 1 à 7 et/ou comportant un dispositif selon l'une au moins des revendications 12 à 14, le corps (105) étant de préférence un arbre de rotor de la pompe à vide.

Fig. 1

Fig. 2

Fig. 3

Fig. 4

Fig. 5

EP 3 064 791 B1

Fig. 6B

Fig. 6A

Fig. 7

Fig. 8

Fig. 9

EP 3 064 791 B1

## Fig. 10a

## Fig. 10b

Fig. 11

Fig. 12

EP 3 064 791 B1

```
                                                              ┌─ S110
┌────────────────────────────────────────────────────┐      │
│ Anregen der ersten Spule 110 und der zweiten Spule   │
│ 210 mit einem Spannungssignal Uc, um durch einen    │
│ ersten Strom i₁ in der ersten Spule 110 ein erstes   │
│ Magnetfeld zu erzeugen und durch einen zweiten       │
│ Strom i₂ in der zweiten Spule 210 ein zweites        │
│ Magnetfeld zu erzeugen                               │
└────────────────────────────────────────────────────┘
```

Anregen der ersten Spule 110 und der zweiten Spule 210 mit einem Spannungssignal $U_c$, um durch einen ersten Strom $i_1$ in der ersten Spule 110 ein erstes Magnetfeld zu erzeugen und durch einen zweiten Strom $i_2$ in der zweiten Spule 210 ein zweites Magnetfeld zu erzeugen — S110

Erfassen einer Differenz von zeitlichen Änderungen des ersten Stroms $i_1$ und des zweiten Stroms $i_2$ und Ermitteln einer Positionsabweichung des Körpers 105 basierend auf der Differenz — S120

Ändern des Spannungssignal $U_c$ basierend auf der ermittelten Positionsabweichung, sodass der Körper schwebend gehalten wird — S130

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0836022 A1
- JP 2004132537 A